# FASCICULE DE BREVET EUROPEEN

(11) **EP 0 878 939 B1**
(45) Date de publication et mention de la délivrance du brevet: **27.07.2005**
(21) Numéro de dépôt: 98401118.9
(22) Date de dépôt: 11.05.1998
(51) Int. Cl.: H04L 12/56, H04Q 11/04

(54) **Espaceur de cellules ATM**
ATM Zellenpositionierungsanlage
ATM cell spacer

(30) Priorité: 13.05.1997 FR 9705827
(43) Date de publication de la demande: 18.11.1998
(73) Titulaire: Ericsson France, 91300 Massy (FR)
(72) Inventeur: Ha-Duong, Tuan, 92160 Antony (FR); Soares Moreira, Serafin, 91348 Massy Cedex (FR)
(74) Mandataire: Loisel, Bertrand

(56) Documents cités:
- EP-A- 0 378 195
- EP-A- 0 710 046
- MERCANKOSK G ET AL: "MULTIPLEXING SPACER OUTPUTS ON CELL EMISSIONS" PROCEEDINGS OF INFOCOM '95 - CONFERENCE ON COMPUTER COMMUNICATIONS, FOURTEENTH ANNUAL JOINT CONFERENCE OF THE IEEE COMPUTER AND COMMUNICATIONS SOCIETIES, BOSTON APR. 2 - 6, 1995, vol. 3, 2 avril 1995, pages 49-55, XP000580562 INSTITUTE OF ELECTRICAL AND ELECTRONICS ENGINEERS
- BOYER P ET AL: "A SPACER-MULTIPLEXER FOR PUBLIC UNIS" ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, vol. 1, 23 avril 1995, pages 457-461, XP000495613 VERBAND DEUTSCHER ELEKTROTECHNIKER (VDE) ET AL

## Description

La présente invention concerne un espaceur de cellules ATM.

Une description générale de ce genre d'équipement peut être trouvée dans l'article de P.E. BOYER et al : "Spacing Cells Protects and Enhances Utilization of ATM Network Links" (IEEE Network, septembre 1992, pages 38-49).

Les cellules ATM sont des paquets d'informations de 53 octets transmis sur des liaisons physiques à grande vitesse (débit de 155 ou 622 Mbit/s). Chaque liaison physique supporte un multiplex de cellules appartenant à diverses connexions virtuelles. La connexion virtuelle dont relève chaque cellule est identifiée par un couple d'identificateurs VPI-VCI contenus dans l'en-tête de la cellule. Certains équipements différencient les connexions virtuelles selon l'identificateur de conduit virtuel (VPI : "Virtual Path Identifier"), tandis que d'autres équipements différencient les connexions virtuelles sur la base des identificateurs de voie virtuelle (VCI : "Virtual Channel Identifier"), ou des deux identificateurs VPI, VCI.

Dans la présente description, on considérera que chaque cellule ATM relève d'une connexion virtuelle identifiée par une identité IdCx interne à l'équipement pourvu de l'espaceur. Cette identité interne peut correspondre au VPI, au VCI, au couple VPI-VCI, ou encore, plus commodément, à une identité spécifique propre à l'équipement et comportant un plus petit nombre de bits que le VPI-VCI, de façon à faciliter les accès dans des modules de mémoire de taille raisonnable. Une façon appropriée d'associer de telles identités IdCx aux cellules ATM est décrite dans la demande de brevet français n° 97 01222.

L'espaceur ATM est une unité dont la fonction principale est de régulariser le débit de cellules sur les différentes connexions supportées par une liaison physique. En général, chaque source émettant sur une connexion virtuelle négocie avec l'opérateur un débit-crête. Si ce débit-crête n'est pas respecté par la source, des congestions risquent de se produire dans le réseau, et l'opérateur est habilité à détruire des cellules sur la connexion.

Dans un espaceur, un intervalle d'espacement T est alloué à chaque connexion IdCx, de façon que deux cellules consécutives relatives à la même connexion virtuelle soient généralement séparées d'au moins l'intervalle de temps T qui correspond typiquement à l'inverse du débit-crête. On parle alors d'espaceur réel. L'espaceur réel calcule pour chaque cellule une heure d'émission théorique TET, puis stocke la cellule en mémoire pour l'émettre seulement en temps voulu. L'intervalle d'espacement T est alors respecté pour toutes les connexions. Dans un espaceur dit virtuel, il est d'abord calculé pour chaque cellule une heure d'émission théorique TET, selon les mêmes méthodes que précédemment, puis la cellule est stockée en mémoire. La différence avec l'espaceur réel est que l'espaceur virtuel émet immédiatement les cellules dans l'ordre des heures d'émission théoriques. L'espaceur virtuel ne dégrade pas la fluctuation des retards de cellule (CDV : "Cell Delay Variation"). Cependant, il ne réduit pas la dégradation possible du débit par des files d'attente situées en amont de l'espaceur.

La fonction d'espacement est fréquemment associée à la fonction de police qui consiste à éliminer des cellules transmises suivant une connexion virtuelle à un débit supérieur au débit-crête, lorsque cet excès de débit est tel qu'il n'est plus possible de produire un multiplex de sortie dans lequel les cellules relevant de la connexion sont correctement espacées sans que le CDV dépasse une valeur limite dépendant de la qualité de service négociée avec l'opérateur. La fonction de police intervient habituellement dans la façon de calculer les heures théoriques d'émission TET des cellules.

Une façon classique d'allouer des heures théoriques d'émission aux cellules et d'assurer la fonction de police est d'appliquer l'algorithme GCRA ("Generic Cell Rate Algorithm") défini dans l'annexe 1 de la Recommandation I.371 de l'ITU-T (voir M. DE PRYCKER : "Asynchronous Transfer Mode, Solution for Broadband ISDN", 2ème Edition, 1993, Chapitre 7, paragraphe 7.3.4, pages 292-293). Pour chaque connexion virtuelle, cet algorithme vérifie toujours la relation suivante : ta≤TET≤ta+τ, où ta désigne l'heure d'arrivée de la cellule, à laquelle est calculée son heure théorique d'émission TET, et τ désigne la tolérance de CDV de la connexion.

Des cellules relevant de connexions virtuelles différentes sont susceptibles de se voir allouer la même heure théorique d'émission. Il en résulte la nécessité de prévoir un mécanisme pour résoudre de tels conflits.

Une première solution, décrite dans le document EP-A-0 438 009, consiste à stocker chaque cellule entrante à une adresse de la mémoire de cellules correspondant à son heure réelle d'émission. En sortie de l'espaceur, un compteur de temps sert de pointeur d'adresse pour désigner les cellules à émettre. Après l'affectation d'une heure théorique d'émission à la cellule, celle-ci est stockée à la première adresse disponible après cette heure théorique, ce qui évite les conflits.

Une seconde solution, décrite dans le document EP-A-0 498 092 (voir aussi E. Wallmeier et al : "The Spacing Policer, an Algorithm for Efficient Peak Bit Rate Control in ATM Networks", Proc. of ISS'92, octobre 1992, Vol.2, pages 22-26), consiste à associer à chaque période d'émission une liste de cellules chaînées au moyen de pointeurs. Lorsqu'une période d'émission est atteinte, les cellules de la liste associée sont lues et sorties à tour de rôle au cours de cette période et du nombre requis de périodes suivantes.

Une troisième solution, décrite dans l'article "A Real Time Sorter with Application tc ATM Traffic Control" de J.W. Roberts et al (Proc. of ISS'95, avril 1995, Vol.1, pages 258-262), consiste à faire appel à une technique de tri : à l'arrivée de chaque cellule, un élément de données composé de l'adresse de stockage de la cellule et d'une clé de tri correspondant à son heure théorique d'émission est introduit dans un dispositif de tri, lequel produit à chaque période d'émission un élément ayant une clé de tri minimale. La cellule dont l'adresse est comprise dans cet élément est émise si la clé minimale est inférieure ou égale à l'heure courante dans le cas d'un espaceur réel, ou immédiatement dans le cas d'un espaceur virtuel. Le dispositif de tri doit être capable de trier un nombre N d'éléments égal au nombre maximal de cellules stockées dans l'espaceur. On note en outre que le dispositif de tri préconisé a l'inconvénient que le nombre de circuits logiques fonctionnant en parallèle pour assurer la fonction de tri à la cadence suffisante est proportionnel à N. Dès que le nombre N d'éléments à trier devient important (quelques milliers ou dizaines de milliers comme dans le cas d'application à un espaceur de cellules ATM), la complexité matérielle du dispositif de tri devient rédhibitoire.

Dans les trois solutions ci-dessus, l'espaceur ignore la notion de connexion virtuelle une fois qu'une heure théorique d'émission a été allouée à une cellule entrante. Il en résulte que le processus de détermination d'une cellule stockée à émettre est un choix d'une cellule parmi un nombre correspondant à la capacité de stockage maximale de l'espaceur. Ceci implique une complexité superflue dès lors qu'en principe l'ordre de réception des cellules relevant d'une même connexion virtuelle doit être respecté à l'émission.

En cas de risque de congestion de trafic sur la liaison équipée de l'espaceur, l'opérateur a parfois la possibilité d'augmenter les intervalles d'espacement T alloués à certaines connexions. Mais une telle modification de T n'agit que sur les cellules non encore reçues, et non sur celles déjà écrites dans la mémoire tampon de l'espaceur étant donné que les heures théoriques d'émission calculées auparavant ne sont plus modifiables sans la connaissance des connexions concernées. Or les cellules déjà écrites dans la mémoire tampon peuvent être en nombre suffisant pour que l'augmentation des intervalles T soit inefficace dans la prévention de la congestion. Les espaceurs ci-dessus manquent à cet égard de souplesse.

Un espaceur ATM, dans lequel la sélection de la cellule à émettre est opérée sur la base des heures théoriques d'émission affectées aux cellules mémorisées dans les têtes de listes FIFO allouées aux différentes connexions virtuelles, est décrit dans EP-A-0 710 046. Ce document décrit une méthode particulière de calcul des heures d'émission suivant laquelle l'heure théorique d'émission d'une cellule dépend de l'heure réelle d'émission de la cellule précédente relevant de la même connexion virtuelle. Une méthode semblable est décrite dans l'article "Multiplexing Spacer Outputs on Cell Emissions", de G. Mercankosk et al, Proc. Infocom'95 - Conference on Computer Communications, 14-th Annual Joint Conference of the IEEE Computer and Communications Societies, Boston, 2-6 avril 1995, Vol. 3, pages 49-55.

Ce type de méthode a pour inconvénient que, lorsqu'une cellule se trouve retardée à cause d'un conflit entre cellules relevant de connexions différentes et auxquelles la même heure théorique d'émission a été allouée, les cellules suivantes de la même connexion sont retardées aussi même si le conflit a disparu. Il en résulte dans de tels cas une perturbation inutile du flux.

Un but de la présente invention est de proposer un espaceur ATM qui soit moins affecté par les inconvénients ci-dessus.

L'invention propose ainsi un espaceur de cellules ATM transmises selon un ensemble de connexions virtuelles, comprenant :
- une mémoire de cellules dans laquelle des cellules entrantes sont écrites et des cellules sortantes sont lues;
- des moyens pour attribuer une heure théorique d'émission à chaque cellule stockée dans la mémoire de cellules, comprenant des moyens de calcul récursif d'une heure théorique d'émission pour chaque cellule relevant d'une connexion virtuelle sur la base de paramètres incluant au moins l'heure d'arrivée de ladite cellule et un intervalle d'espacement alloué à ladite connexion ;
- des moyens de contrôle d'espacement pour gérer la mémoire de cellules, à l'aide d'une mémoire de pointeurs associée, de façon que la mémoire de cellules comporte, pour chaque connexion virtuelle pour laquelle elle contient des cellules, une liste d'emplacements où ces cellules sont rangées en mode premier entré-premier sorti entre une tête de liste et une fin de liste ; et
- des moyens de tri pour ordonnancer des éléments de données comportant chacun une identité de connexion virtuelle et une clé de tri consistant en l'heure théorique d'émission de la cellule contenue dans la tête de liste relative à ladite connexion virtuelle, et pour sélectionner au moins un élément de données ayant une clé de tri minimale, les moyens de contrôle d'espacement étant agencés pour commander l'émission d'une cellule contenue dans la tête de liste relative à une connexion virtuelle identifiée dans un élément de données sélectionné par les moyens de tri.

A l'arrivée d'une cellule relevant d'une connexion virtuelle pour laquelle la mémoire de cellules ne contient aucune cellule, les moyens de tri reçoivent un nouvel élément de données comportant l'identité de ladite connexion virtuelle et, comme clé de tri, l'heure théorique d'émission de ladite cellule fournie par les moyens de calcul récursif. A l'émission d'une première cellule relevant d'une connexion virtuelle pour laquelle la mémoire de cellules comporte une liste d'emplacements contenant en outre au moins une seconde cellule, les moyens de tri reçoivent un nouvel élément de données comportant l'identité de ladite connexion virtuelle et, comme clé de tri, une heure théorique d'émission de ladite seconde cellule égale à l'heure théorique d'émission de ladite première cellule augmentée de l'intervalle d'espacement alloué à ladite connexion.

L'espaceur gagne en complexité et en souplesse d'utilisation par le fait que les cellules émises sont choisies par un processus de tri basé sur les têtes de liste par connexion et non sur l'ensemble des cellules mémorisées.

Le mode de détermination des heures d'émission limite les retards subis par les cellules du fait des conflits sur les créneaux d'émission. Dans certains cas, on réduit même le retard subi par rapport aux heures théoriques d'émission obtenues par les moyens de calcul récursif.

Les moyens de tri comprennent avantageusement un ou plusieurs dispositifs de tri à arbre binaire d'un type décrit en détail ci-après.

D'autres particularités et avantages de la présente invention apparaîtront dans la description ci-après d'exemples de réalisation non limitatifs, en référence aux dessins annexés, dans lesquels :
- la figure 1 est un schéma d'un arbre binaire de tri ;
- la figure 2 est un schéma synoptique d'un dispositif de tri utilisable selon l'invention ;
- la figure 3 est un schéma synoptique montrant l'environnement de chaque contrôleur du dispositif de la figure 2 ;
- les figures 4A à 4C montrent un organigramme du fonctionnement du contrôleur de la figure 3 ;
- la figure 5 montre un chronogramme du fonctionnement du dispositif de tri ;
- les figures 6 et 7 sont des schémas semblables à celui de la figure 3 et montrant des variantes possibles pour l'environnement des contrôleurs ;
- la figure 8 est un schéma montrant un registre à décalage utilisable avec un dispositif de tri selon la figure 7 ;
- la figure 9 montre un chronogramme simplifié du dispositif de tri ;
- les figures 10A et 10B, qui sont à compléter avec la figure 4C, montrent un organigramme du fonctionnement du contrôleur de la figure 7 ;
- les figures 11A et 11B, qui sont à compléter avec la figure 4C, montrent un organigramme correspondant à celui des figures 10A, 10B et 4C dans le cas particulier du dernier étage de l'arbre binaire ;
- la figure 12 est un schéma d'ensemble d'un espaceur de cellules ATM mettant en oeuvre la présente invention ;
- la figure 13 montre des chronogrammes du fonctionnement de l'espaceur de la figure 12 ;
- les figures 14 et 15 sont des organigrammes montrant respectivement les opérations effectuées par le contrôleur de l'espaceur de la figure 12 lors de la réception et de l'émission d'une cellule ATM ;
- les figures 16 et 17 sont des schémas partiels de variantes d'espaceurs ATM mettant en oeuvre la présente invention ;
- la figure 18 montre des chronogrammes comparables à ceux de la figure 13 et se rapportant à une variante de réalisation de l'espaceur.

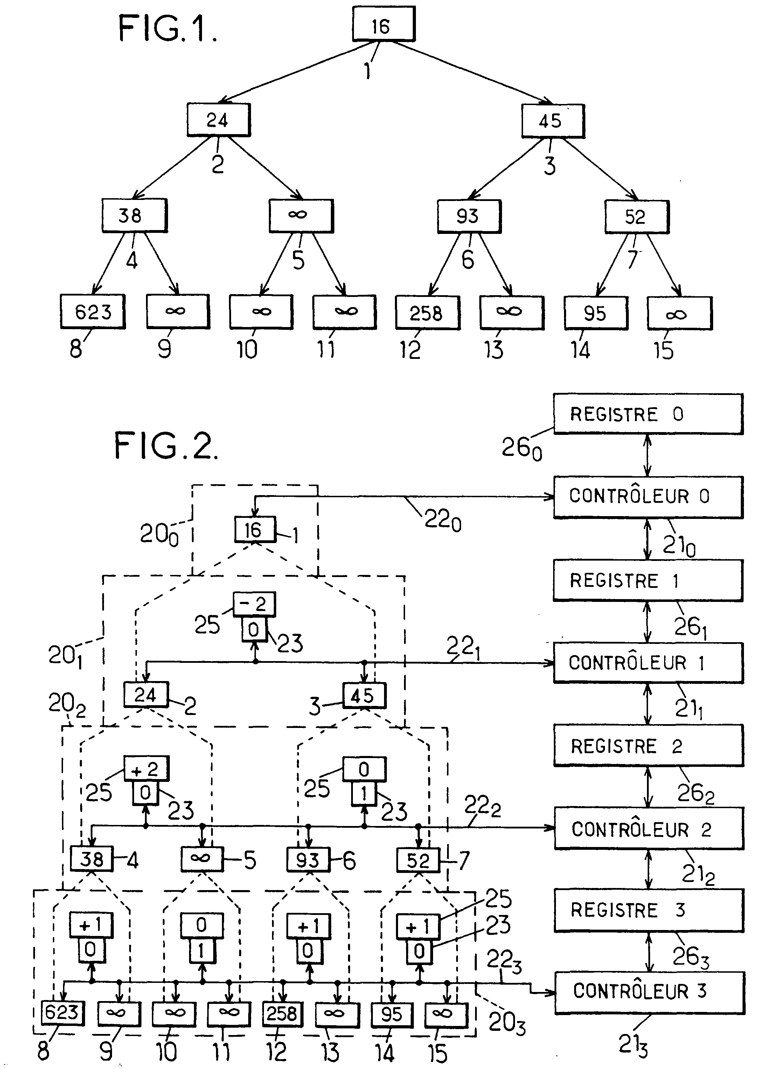

Avant de décrire la structure générale d'un espaceur ATM selon l'invention, on va d'abord décrire, en référence aux figures 1 à 11, des réalisations d'un dispositif de tri utilisable avantageusement dans un tel espaceur. Ce dispositif, qui trie des éléments de données incluant chacun une clé de tri respective, comprend :
- des moyens de mémorisation organisés selon un arbre binaire de 2ⁿ-1 noeuds numérotés de 1 à 2ⁿ-1 aptes à contenir chacun un élément de données et répartis en n étages successifs numérotés de 0 à n-1, l'étage q comprenant les noeuds 2^{q} à 2^{q+1}-1 ; et
- des moyens de contrôle de l'arbre binaire pour distribuer les éléments à trier dans l'arbre de façon à vérifier une condition d'ordonnancement selon laquelle, pour chaque entier i compris entre 1 et 2ⁿ⁻¹-1 tel que le noeud i contienne un élément à trier, chacun des noeuds 2i et 2i+1 soit ne contient pas d'élément à trier, soit contient un élément dont la clé de tri est supérieure ou égale, au sens d'une relation d'ordre déterminée, à la clé de tri de l'élément contenu dans le noeud i.

L'ordonnancement des éléments dans l'arbre de tri correspond à ce qu'on appelle le "tri par tas" ("heapsort") dans le domaine du tri informatique. On pourra à cet égard se reporter à l'ouvrage de Knuth : "The art of computer programming, Vol. 3, Sorting and searching", Addison Wesley, 1973, pages 142-157.

A titre d'illustration, la figure 1 montre, dans le cas où n=4, un arbre de tri comportant quinze noeuds 1-15 contenant des éléments de données (dont seule la clé de tri est représentée) qui vérifient la condition d'ordonnancement.

Le noeud 1 de l'étage 0 est appelé sommet ou racine de l'arbre. Les 2ⁿ⁻¹ noeuds 2ⁿ⁻¹ à 2ⁿ-1 de l'étage n-1 sont appelés feuilles de l'arbre. Pour chaque noeud i d'un étage q, les 2^{n-q}-1 noeuds de l'arbre dont les numéros sont de la forme i2^{j}+j', où j et j' sont des entiers tels que 0≤j<n-q et 0≤j'<2^{j}, sont appelés descendants du noeud i (on considère ici que le noeud i est inclus dans ses descendants). Parmi ces descendants, les noeuds frères 2i et 2i+1 de l'étage q+1 (si q<n-1) sont appelés fils du noeud i. Le père du noeud i (si q>0) est d'autre part défini comme le noeud de l'étage q-1 dont le numéro est i/2 si i est pair et (i-1)/2 si i est impair. Ces relations logiques de filiation entre les noeuds de l'arbre sont représentées par des flèches sur la figure 1.

La relation d'ordre entre les clés de tri est arbitraire. Dans le cas illustré par la figure 1, il s'agit de la relation d'ordre familière entre les entiers naturels, permettant un tri en ordre croissant des clés de tri. Dans le cas d'un tri en ordre décroissant, il suffit clairement d'inverser la relation d'ordre entre les clés. Sur la figure 1, on a considéré que les noeuds de l'arbre non occupés par des éléments à trier contiennent chacun un élément dont la clé de tri est infinie, c'est-à-dire supérieure à toute clé de tri d'un élément de données à trier. Une possibilité pour coder une clé infinie est de réserver à cet effet un bit du champ de données contenant la clé ; la clé sera par exemple considérée comme infinie si ce bit est à 1 et comme finie sinon ; en d'autres termes, ce bit indique si le noeud est libre ou occupé par un élément de données.

Une fois qu'il est chargé avec un ensemble de N<2ⁿ éléments de données ordonnancés, le dispositif de tri est capable de délivrer séquentiellement ces N éléments en N cycles dans l'ordre des clés de tri. L'extraction d'un élément de l'arbre au cours d'un cycle consiste à lire l'élément situé au sommet de l'arbre et à faire remonter des éléments de sa descendance de manière à vérifier toujours la condition d'ordonnancement. Ainsi, dans le cas représenté sur la figure 1, le premier cycle consiste à lire l'élément 16 situé au sommet, et à déplacer l'élément 24 vers le sommet, puis l'élément 38 vers le noeud 2 et enfin l'élément 623 vers le noeud 4. Ceci revient à propager la commande d'extraction depuis le sommet en direction des feuilles.

Dans un certain nombre d'applications, il est nécessaire que les moyens de contrôle soient également capables de répondre à des commandes d'insertion d'un nouvel élément à trier dans l'arbre. Le dispositif de tri est alors capable de délivrer ou de recevoir à chaque cycle des éléments à trier. Il fonctionne comme une file d'attente dynamique sur la base des clés de tri, gérées suivant la relation d'ordre utilisée, et pouvant représenter des étiquettes temporelles ou tout autre type d'index de priorité.

La figure 2 montre un dispositif de tri dans lequel les éléments de données sont contenus dans une mémoire 20₀-20₃ organisée conformément à l'arbre binaire de la figure 1, avec n=4 étages.

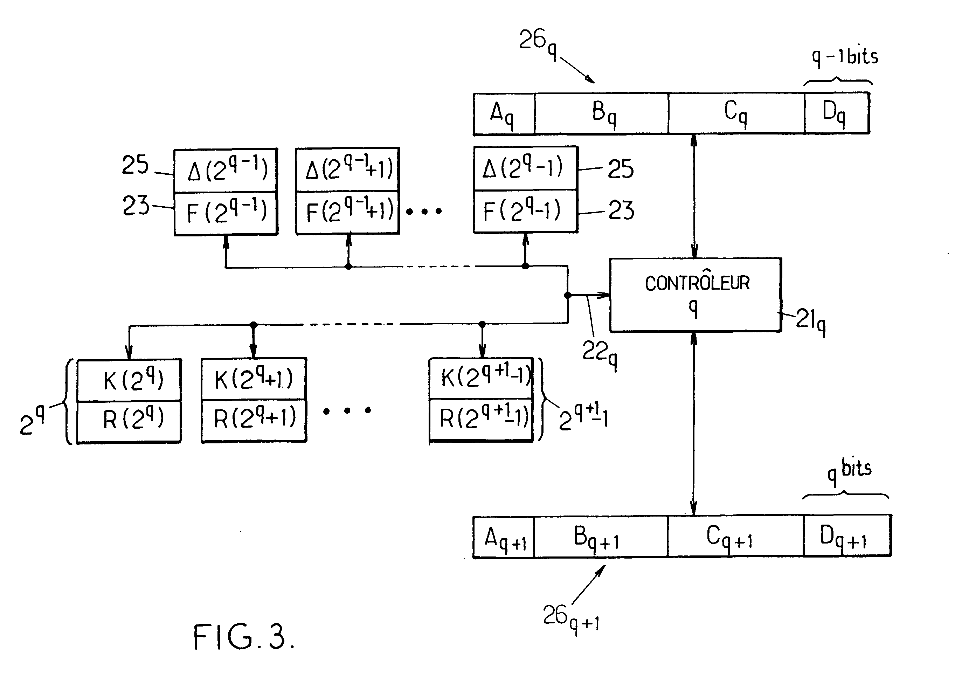

L'arbre binaire est contrôlé par un ensemble de m contrôleurs distincts, où m est un entier compris entre 2 et le nombre n d'étages de l'arbre. Dans le cas considéré sur les figures 2 et 3, il y a un contrôleur 21_{q} pour chaque étage q de l'arbre, soit m=n=4. Chaque contrôleur 21q comporte un bus 22_{q} lui permettant d'accéder à l'étage q. Les moyens de mémorisation de l'arbre sont ainsi divisés en m=4 modules de mémoire 20₀-20₃ accessibles chacun par un bus respectif 22₀-22₃. Dans chaque noeud i se trouvent deux emplacements de mémoire pour contenir respectivement la clé de tri K(i) d'un élément de données, seule représentée sur la figure 2 (K(i) =∞ en l'absence d'élément), et une référence R(i) de cet élément (cf. figure 3).

Chaque étage q de l'arbre autre que l'étage 0 comporte, outre les noeuds 2^{q} à 2^{q+1}-1, 2^{q-1} emplacements 23 de capacité 1 bit, et 2^{q-1} emplacements 25 de capacité n-q+1 bits. Chaque emplacement 23 contient un bit d'orientation F(i) associé à un couple de noeuds frères 2i et 2i+1 de l'étage q, dont la valeur est F(i)=0 si la clé contenue dans le frère de gauche 2i est inférieure à celle contenue dans le frère de droite 2i+1 (K(2i)<K(2i+1)), et F(i)=1 si K(2i+1)≤K(2i). Le nombre total d'emplacements 23 dans l'arbre de tri est 2ⁿ⁻¹-1.

Chaque emplacement 25 de l'étage q contient un compteur différentiel Δ(i) associé à un couple de noeuds frères 2i et 2i+1 de l'étage q, dont la valeur est donnée par la différence entre le nombre d'éléments de données contenus dans les descendants du frère de gauche 2i et le nombre d'éléments de données contenus dans les descendants du frère de droite 2i+1.

Les bits d'orientation F(i) servent à propager les commandes d'extraction ou d'échange du sommet vers les feuilles de l'arbre, tandis que les compteurs différentiels Δ(i) servent à propager les commandes d'insertion du sommet vers les feuilles de l'arbre.

Les moyens de contrôle de l'arbre binaire comprennent en outre n-1=3 registres d'interface 26₁-26₃, chaque registre 26_{q} servant d'interface entre le contrôleur 21_{q-1} de l'étage q-1 et le contrôleur 21_{q} de l'étage q. Sur le schéma de principe de la figure 2, on a en outre représenté un registre 26₀ servant d'interface entre le contrôleur 21₀ de l'étage 0 et l'environnement du dispositif de tri. Les commandes envoyées au dispositif de tri sont écrites dans ce registre 26₀, de même que les réponses fournies par le dispositif de tri. Dans la pratique, ce registre 26₀ peut appartenir au même circuit que le contrôleur 21₀ de l'étage supérieur de l'arbre.

En référence à la figure 3, chaque registre 26_{q} se compose de quatre emplacements contenant respectivement :
- un code de commande A_{q} désignant la nature de la commande propagée du sommet vers les feuilles de l'arbre ; dans la suite de l'exposé, on considérera à titre d'exemple que les commandes A_{q} sont codées sur deux bits de la façon suivante : A_{q}=00 pour une absence de modification du contenu de l'arbre à partir de l'étage q, A_{q}=01 pour une commande d'insertion d'un nouvel élément, A_{q}=11 pour une commande d'échange consistant à extraire de l'arbre l'élément ayant la plus petite clé de tri en même temps qu'on y insère un nouvel élément (l'extraction simple de l'élément ayant la plus petite clé de tri est traitée comme l'échange de cet élément avec un élément ayant une clé de tri infinie), et A_{q}=10 pour une commande de réinitialisation du contenu de l'arbre à partir de l'étage q ;
- une clé de tri B_{q} transmise de l'étage q-1 vers l'étage q lors d'une commande d'insertion ou d'échange, ou de l'étage q vers l'étage q-1 lors d'une commande d'échange ;
- une référence C_{q} associée à la clé de tri B_{q} et formant avec celle-ci un élément de données inséré ou échangé ; et
- une identification D_{q} se composant de q-1 bits (cette identification n'existe pas dans le registre 26₀), désignant le noeud de l'étage q-1 d'où provient la commande A_{q}. Plus précisément, l'identification D_{q} est constituée par les q-1 bits de poids les plus faibles de la représentation binaire du numéro du noeud i de l'étape q-1 d'où provient la commande A_{q}, c'est-à-dire que i=1D_{q} en base 2.

Pour insérer un nouvel élément dans l'arbre, on inscrit la commande A₀=01, et ce nouvel élément B₀, C₀ dans le registre 26₀, et la commande est ensuite propagée du sommet vers les feuilles de l'arbre. Pour effectuer un échange, on écrit la commande A₀=11 et l'élément B₀, C₀ à insérer dans le registre 26₀ (avec B₀=∞ dans le cas d'une extraction simple), puis on récupère l'élément ayant la plus petite clé dans les emplacements B₀ et C₀ du registre 26₀.

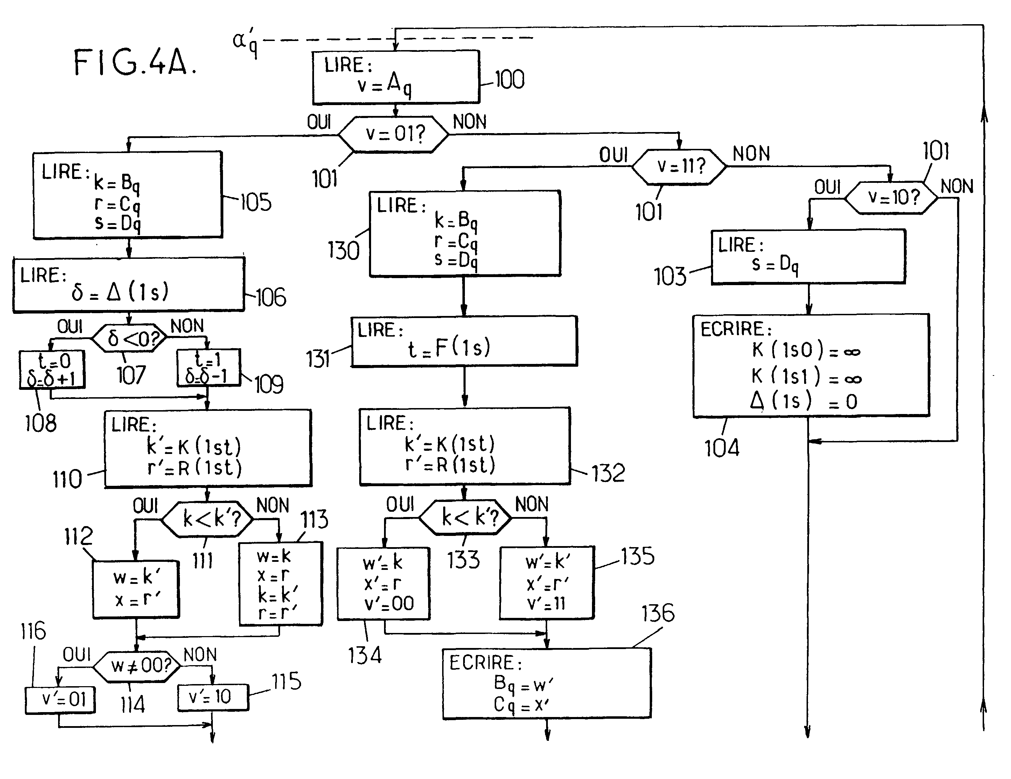

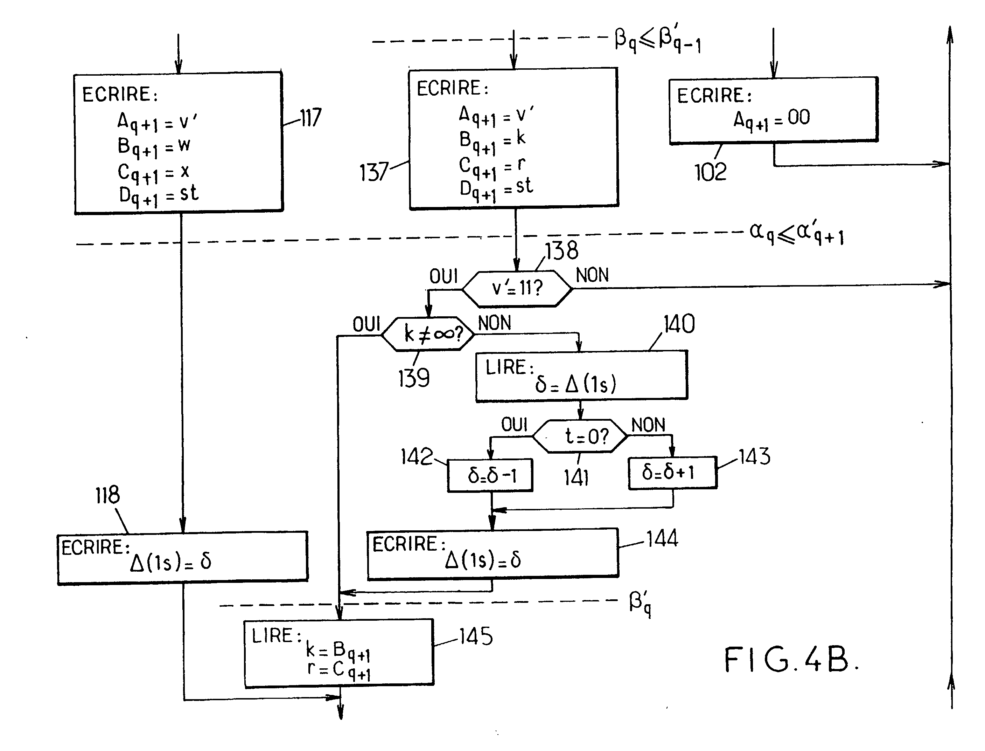

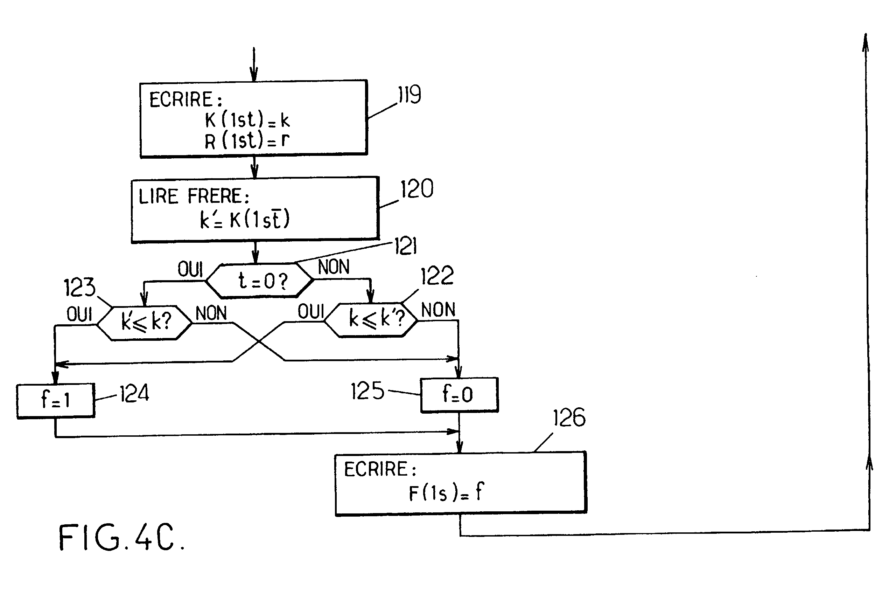

Les opérations effectuées par chaque contrôleur 21_{q} sont représentées sur l'organigramme des figures 4A, 4B et 4C. Pour l'exécution de ces opérations, chaque contrôleur 21_{q} est réalisé sous la forme d'un réseau de portes logiques rapides convenablement programmé. Les opérations étant pour l'essentiel des lectures/écritures, des incrémentations/décrémentations et des comparaisons de variables codées en binaire, cette programmation du réseau de portes ne pose aucun problème.

La commande A_{q} est d'abord lue dans le registre 26_{q} (étape 100) puis évaluée (étapes 101) pour identifier le type de commande.

Dans le cas d'une absence de modification (A_{q}=00), le contrôleur 21_{q} écrit simplement la même commande A_{q+1}=00 dans le registre suivant 26_{q+1} (étape 102).

Dans le cas d'une commande de réinitialisation (A_{q}=10), l'identification D_{q} du père est affectée à la variable s (étape 103), et le contrôleur 21_{q} initialise les deux noeuds fils, dont les numéros ont pour représentations binaires 1s0 et 1s1, en mettant leur clé de tri à l'infini et la valeur 0 dans le compteur différentiel associé Δ(1s) (étape 104), avant de propager la commande A_{q+1}=00 à l'étape 102. Dans le cas particulier de l'étage 0, la réinitialisation consiste seulement à écrire K(1)=∞.

Lorsque la commande A_{q} lue dans le registre 100 se rapporte à l'insertion d'un nouvel élément B_{q}, C_{q} depuis un noeud père 1D_{q} (A_{q}=01), ces paramètres B_{q}, C_{q} et D_{q} sont respectivement lus par le contrôleur 21_{q} et affectés à des variables k, r et s à l'étape 105, puis le compteur différentiel Δ(1s) associé aux fils du noeud identifié est affecté à la variable δ à l'étape 106.

Si δ<0 (comparaison 107), le fils droit a une descendance plus nombreuse que le fils gauche, et on a l'assurance que le fils gauche a dans sa descendance au moins un noeud capable de recevoir le nouvel élément, de sorte que la commande d'insertion sera propagée vers le fils gauche. Le bit t est alors pris égal à 0, et la variable δ incrémentée d'une unité à l'étape 108. Inversement, si δ≥0, le bit t est pris égal à 1, et la variable δ décrémentée d'une unité à l'étape 109 pour propager la commande d'insertion vers le fils droit. A l'étape 110, la clé de tri K(1st) et la référence R(1st) de l'élément de données contenu dans le noeud traité, c'est-à-dire celui vers lequel est propagée la commande, sont lues et respectivement affectées aux variables k' et r'.

Si k<k' (comparaison 111), le noeud traité contient une clé de tri plus grande que l'élément de données à insérer, de sorte que l'élément w, x qui sera propagé vers l'étage q+1 est pris, à l'étape 112, égal à celui k', r' lu dans le noeud traité. Si k'≤k, l'élément à transmettre w, x est pris, à l'étape 113, égal à celui k, r lu dans le registre 26_{q} à l'étape 113, puis les variables k, r reçoivent respectivement les valeurs des variables k', r'.

Si la clé w de l'élément de données à propager est infinie (comparaison 114), c'est que la commande d'insertion n'a plus lieu d'être propagée. Le processeur 21_{q} donne alors la valeur 10 (réinitialisation) à la variable v' à l'étape 115. Si la clé w à transmettre est finie, la variable v' reçoit la valeur 01 à l'étape 116 pour indiquer une commande d'insertion. Le processeur 21_{q} peut ensuite remplir le registre 26_{q+1} en y écrivant A_{q+1}=v', B_{q+1}=w, C_{q+1}=x et D_{q+1}=st à l'étape 117.

Après l'étape 117, le traitement de la commande d'insertion ne nécessite plus que le contrôleur 21_{q} accède à ses registres d'interface 26_{q}, 26_{q+1}, mais seulement à la zone de mémoire 20_{q} qu'il traite. A l'étape 118, il met à jour le compteur différentiel Δ(1s) en y écrivant la nouvelle valeur de la variable δ. Puis, à l'étape 119, il met à jour l'élément de données du noeud traité en y écrivant K(1st)=k et R(1st)=r.

Il ne reste plus alors au contrôleur 21_{q}, pour achever le traitement de la commande d'insertion, qu'à mettre à jour la valeur du bit d'orientation F(1s) associé au noeud traité 1st. Le contrôleur 21_{q} lit d'abord la clé de tri K(1st) de l'élément de données contenu dans le noeud frère du noeud traité, et l'affecte à la variable k'. La variable f, qui sera écrite dans l'emplacement 23 contenant le bit d'orientation F(1s) à l'étape 126, est prise égale à 1 à l'étape 124 (orientation vers le fils droit) si les comparaisons 121, 122, 123 montrent que t=0 et k'≤k, ou que t=1 et k≤k'. Dans le cas contraire, on prend f=0 à l'étape 125.

Après l'étape 126, le processeur 21_{q} a terminé de traiter la commande A_{q}, et peut revenir à l'étape 100 pour traiter la prochaine commande provenant du registre 26_{q}.

Lorsque la commande lue dans le registre 26_{q} se rapporte à l'échange d'un élément de donnée B_{q}, C_{q} depuis un noeud père 1D_{q} de l'étage q-1 (A_{q}=11), ces paramètres B_{q}, C_{q} et D_{q} sont lus et respectivement affectés aux variables k, r et s à l'étape 130, puis la valeur du bit d'orientation F(1s) associé aux deux fils du noeud identifié est affectée au bit t à l'étape 131. Les données K(1st), R(1st) lues dans le noeud traité 1st sont alors affectées aux variables k' et r' à l'étape 132.

Si le noeud traité contient une clé de tri supérieure à celle de l'élément de données lu dans le registre 26_{q} (k<k' lors de la comparaison 133), la commande d'échange n'a plus besoin d'être propagée vers les étages inférieurs de l'arbre, de sorte que la commande v' qui sera écrite dans le registre 26_{q+1} est prise égale à 00 (absence de modification) à l'étape 134. A cette étape 134, l'élément de données w', x', qui sera renvoyé dans le registre 26_{q}, est en outre pris égal à celui k, r qui a la plus petite clé de tri. Si la comparaison 133 montre que k≥k', l'étape 134 est remplacée par une étape 135 dans laquelle le processeur 21_{q} prend w'=k', x'=r' et v'=11 (propagation de la commande d'échange).

Le processeur 21_{q} procède alors à l'étape 136 où il écrit l'élément w',x' dans les emplacements B_{q} et C_{q} du registre d'interface 26_{q}.

Pour propager la commande, le contrôleur 21_{q} exécute ensuite l'étape 137, où il écrit dans le registre d'interface 26_{q+1} : A_{q+1}=v', B_{q+1}=k, C_{q+1}=r et D_{q+1}=st.

Si la commande propagée n'est pas une commande d'échange, c'est-à-dire si la comparaison 138 montre que v'≠11, le traitement de la commande d'échange par le contrôleur 21q est terminé après l'étape d'écriture 137. Sinon, le processeur 21_{q} passe à l'étape 139 où il examine si la clé k qu'il a transmise vers l'étage q+1 est infinie ou non.

Si la comparaison 139 montre que k=∞, alors la commande d'échange est en fait une commande d'extraction simple, et il est nécessaire de mettre à jour le compteur différentiel Δ(1s) associé au noeud traité. La valeur de ce compteur différentiel est d'abord lue et affectée à la variable δ à l'étape 140. Si le contrôleur 21_{q} a traité un fils gauche (t=0 lors de la comparaison 141), la variable δ est décrémentée d'une unité à l'étape 142, tandis qu'elle est incrémentée d'une unité à l'étape 143 dans le cas contraire. Le compteur différentiel Δ(1s) est ensuite mis à jour à l'étape 144 selon la nouvelle valeur de la variable δ.

Etant donné que l'échange de deux éléments ayant chacun une clé de tri finie n'affecte pas les valeurs des compteurs différentiels, les étapes 140 à 144 ne sont pas exécutées si la comparaison 139 montre que la clé transmise k est finie.

Le processeur 21_{q} poursuit alors le traitement de la commande d'échange à l'étape 145 en lisant l'élément de données B_{q+1}, C_{q+1} que le contrôleur 21_{q+1} a renvoyé (lors de son étape 136) dans le registre 26_{q+1}, et en affectant cet élément renvoyé aux variables k et r. Le traitement de la commande se termine ensuite par les étapes 119 à 126 telles que décrites précédemment.

L'organigramme des figures 4A-4C a été présenté dans le cas d'un étage q quelconque. Bien entendu, quelques adaptations sont nécessaires pour le premier étage q=0 et le dernier étage q=n-1, Ainsi, pour q=0, le noeud traité 1st s'entend comme étant toujours le sommet de l'arbre, les étapes 106-109, 118, 120-127, 131 et 139-144 pouvant être supprimées. Etant donné qu'il n'est pas nécessaire de prévoir un registre 26ₙ en aval du dernier contrôleur, les étapes 110 à 117 peuvent être supprimées en ce qui concerne le dernier étage n-1, de même que les étapes 102, 137 et 145 et que, pour l'échange seulement, l'étape 119.

L'organisation temporelle du travail en parallèle des contrôleurs successifs est conditionnée par le partage de l'accès aux registres d'interface 26_{q}. Sur les figures 4A et 4B, on a indiqué l'instant α_{q} où le contrôleur 21_{q} a terminé d'écrire dans le registre 26_{q+1} la commande qu'il transmet ainsi que les paramètres associés (après l'étape 102, 117 ou 137 selon le type de commande), ainsi que, dans le cas d'une commande d'échange, l'instant β_{q} où le contrôleur 21_{q} a terminé d'écrire dans le registre 26_{q} l'élément de données B_{q}, C_{q} qu'il renvoie vers le contrôleur 21_{q-1}. On désigne en outre par α'_{q} l'instant où le contrôleur 21_{q} commence à lire une nouvelle commande dans le registre 26_{q} (immédiatement avant l'étape 100), et par β'_{q} l'instant où le contrôleur 21_{q} commence à lire dans le registre 26_{q+1} l'élément de données renvoyé par le contrôleur 21_{q+1} dans le cas d'une commande d'échange (immédiatement avant l'étape 145). Pour obtenir un contrôleurs de telle façon que, pour chaque commande, on ait α_{q}≤α'_{q+1} et β_{q}≤β'_{q-1}.

Pour vérifier ces deux conditions, les contrôleurs 21_{q} peuvent être asynchrones ou synchrones. Dans le premier cas, le fonctionnement en pipe-line est assuré à l'aide de signaux d'acquittement échangés entre les contrôleurs. Après avoir exécuté son étape 136, le contrôleur 21_{q} envoie un signal d'acquittement vers le contrôleur 21_{q-1} qui sait alors qu'il peut procéder à son étape 145 et à la suite du traitement de la commande d'échange. En outre, après avoir exécuté l'étape 102 ou 137 ou 117, le contrôleur 21_{q} envoie un signal d'acquittement au contrôleur 21_{q+1} qui sait alors qu'il peut commencer à traiter la commande en procédant à son étape de lecture 100.

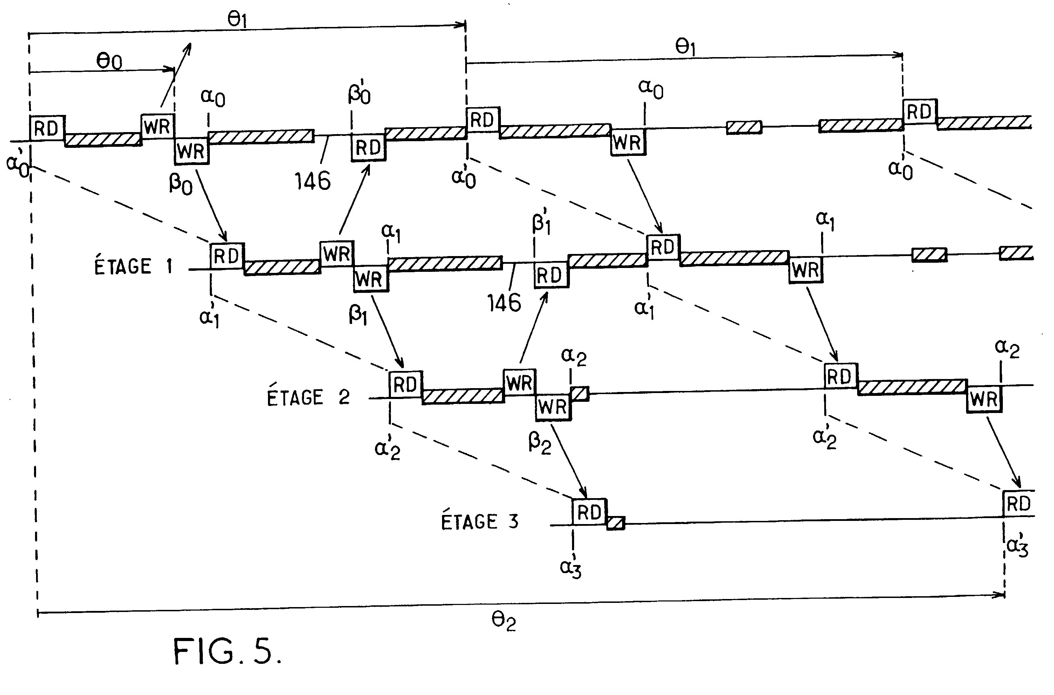

Un fonctionnement synchrone des contrôleurs 21_{q} sera souvent d'une implémentation plus commode dans le cas où les contrôleurs sont réalisés à partir de réseaux de portes logiques. L'organisation du pipe-line dans ce cas est illustrée par les chronogrammes de la figure 5.

Sur cette figure, chacune des quatre lignes illustre le fonctionnement du contrôleur de l'un des étages. Les lettres RD et WR au-dessus de la ligne relative à l'étage q représentent respectivement une lecture et une écriture effectuées par le contrôleur 21_{q} dans le registre 26 q tandis que ces mêmes lettres situées au-dessous de la ligne indiquent respectivement une lecture et une écriture dans le registre 26_{q+1}. Les flèches entre étages représentent ainsi les transferts de commande et de paramètres au moyen des registres pipe-line. Les intervalles hachurés représentent les instants où le contrôleur 21_{q} travaille sur la zone de mémoire 20_{q} qu'il contrôle.

La période θ₁ indiquée sur la figure 5 détermine la cadence à laquelle le dispositif de tri peut recevoir de nouveaux éléments et délivrer les éléments ayant les plus petites clés de tri. Elle correspond à la durée dont a besoin chaque contrôleur pour traiter l'ensemble des instructions relatives à une commande. On observe que cette période θ₁ est sensiblement plus courte que la durée du cycle θ₂ qui est nécessaire pour rétablir la règle d'ordonnancement dans l'ensemble de l'arbre de tri après qu'une nouvelle commande a commencé à être traitée. Dans l'exemple représenté sur la figure 5, la première période θ₁ correspond à l'échange de l'élément situé au sommet de l'arbre avec un autre élément venant se placer dans l'étage 1 (c'est-à-dire que, dans le cas de la figure 2, sa clé est comprise entre 25 et 38), et la seconde période θ₁ correspond à l'insertion d'un nouvel élément jusqu'à l'étage 2 (la clé est supérieure ou égale à celle de l'élément introduit lors de la précédente opération d'échange).

On note encore que le temps de réponse θ₀=β₀-α'₀ pour que le dispositif renvoie dans le registre 26₀ l'élément de données ayant la clé de tri minimale correspond à environ un tiers de la période θ₁.

Pour minimiser la période θ₁, et donc maximiser la cadence de fonctionnement du dispositif de tri, on a intérêt à distribuer de manière homogène les traitements effectués par les contrôleurs dans les intervalles séparant les instants où ils accèdent à leurs registres d'interface. Ceci peut être réalisé en déplaçant le traitement de certaines instructions de l'organigramme des figures 4A à 4C. Si, par exemple, il existe avant les instants β'_{q} des laps de temps 146 (figure 5) où le contrôleur q doit attendre que le contrôleur 21_{q+1} ait terminé d'exécuter sa série d'instructions 130-136 avant d'en lire le résultat dans le registre 26_{q+1}, il est possible de combler au moins en partie ce laps de temps par l'exécution d'autres instructions, ce qui permettra de gagner du temps par ailleurs. C'est ainsi que par exemple, dans le cas des figures 4A-4C, la lecture 120 de la clé de tri du frère du noeud traité pourrait être effectuée avant l'étape 145 dans une opération d'échange et après l'étape 118 dans une opération d'insertion. Ce type d'optimisation dépend largement des choix d'architecture faits pour programmer les réseaux de portes logiques.

Dans la description précédente, on a considéré le cas où chacun des contrôleurs est associé à un seul étage de l'arbre binaire dont l'accès lui est réservé, ce qui donne au dispositif les meilleures performances de rapidité. La complexité du dispositif, mesurée en nombre de circuits logiques (contrôleurs 21_{q}) nécessaires à son fonctionnement, est alors de n, c'est-à-dire le logarithme du nombre maximal d'éléments à trier.

Cette complexité peut être réduite, au prix d'une diminution correspondante de la rapidité du dispositif, en associant non pas un seul, mais plusieurs étages consécutifs de l'arbre à certains au moins chacun des contrôleurs (soit m<n). Le nombre d'étages par contrôleur n'est pas obligatoirement identique pour tous les contrôleurs. En particulier, si le contrôleur associé à l'étage 0 au moins assure en outre d'autres fonctions en liaison avec l'environnement de l'arbre de tri, on pourra prévoir que ce contrôleur gère un nombre d'étages plus petit que les autres.

Dans le cas où un contrôleur est associé à plusieurs étages de l'arbre, la propagation d'une commande suivant ces étages est traitée séquentiellement par ce contrôleur.

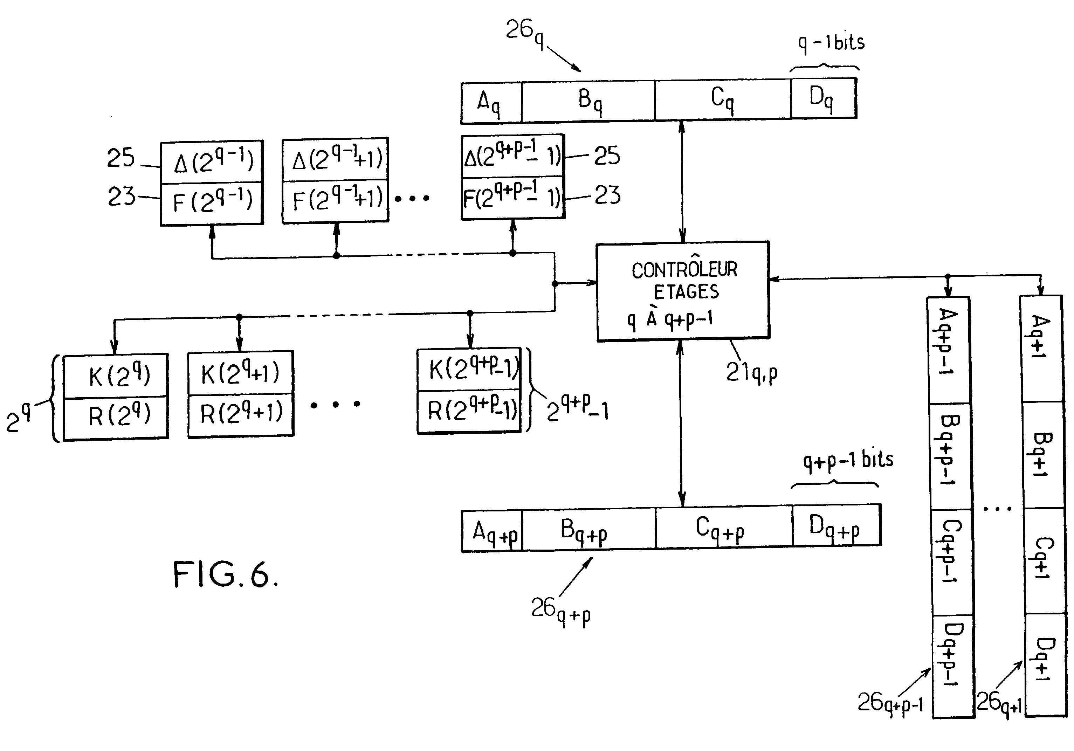

Comme le montre la figure 6 dans le cas d'un contrôleur 21_{q,p} associé aux étages q à q+p-1 de l'arbre, seuls les registres 26_{q}, 26_{q+p} d'interface entre les étages associés à des contrôleurs différents constituent des registres pipe-line pour le fonctionnement en parallèle des contrôleurs successifs. Les autres registres 26_{q+1},...,26_{q+p-1} sont accessibles seulement par le contrôleur 21_{q,p}. Ils peuvent faire partie du circuit logique constituant ce contrôleur 21_{q,p}, ou encore faire partie du module de mémoire réservé à ce contrôleur et comportant les étages q à q+p-1.

On notera qu'il est possible de se dispenser des compteurs différentiels Δ(i) dans les étages de l'arbre binaire associés au m-ième contrôleur. Supposons que ce dernier contrôleur soit associé aux p étages n-p à n-1 (1≤p<n-1). Lorsqu'une commande d'insertion Aₙ₋ₚ=01 est lue dans le registre pipe-line 26ₙ₋ₚ, le père d'où provient cette commande est le noeud 1Dₙ₋ₚ identifié dans ce registre. Si, pour chacun des 2^{n-p-1} pères possibles, le dernier contrôleur tient à jour une liste respective de feuilles libres faisant partie de la descendance de ce noeud père, alors le dernier contrôleur peut traiter la commande d'insertion en la propageant séquentiellement depuis l'étage n-1 en direction de l'étage n-p à partir d'une feuille libre appartenant à la liste associée au noeud père identifié dans le champ Dₙ₋ₚ du registre pipe-line. Dans chacune de ces listes, chacune des feuilles peut être désignée simplement par p bits qui, avec les n-p-1 bits de l'identification Dₙ₋ₚ, identifient la feuille de manière non ambiguë. Une façon simple de tenir cette liste consiste à l'organiser en mode dernier entré-premier sorti (LIFO). Le dernier contrôleur peut également propager la commande d'insertion depuis l'étage n-p en direction de l'étage n-1 étant donné que les p bits désignant une feuille libre à partir d'un père identifié peuvent être utilisés à chaque étage pour orienter la propagation de la commande d'insertion.

En définitive, le dispositif de tri du type illustré par les figures 2 à 6 peut être réalisé en prévoyant seulement 2^{n-p-1}-1 compteurs différentiels Δ(i) respectivement associés aux couples de noeuds 2i et 2i+1 de l'arbre pour i allant de 1 à 2^{n-p-1}-1.

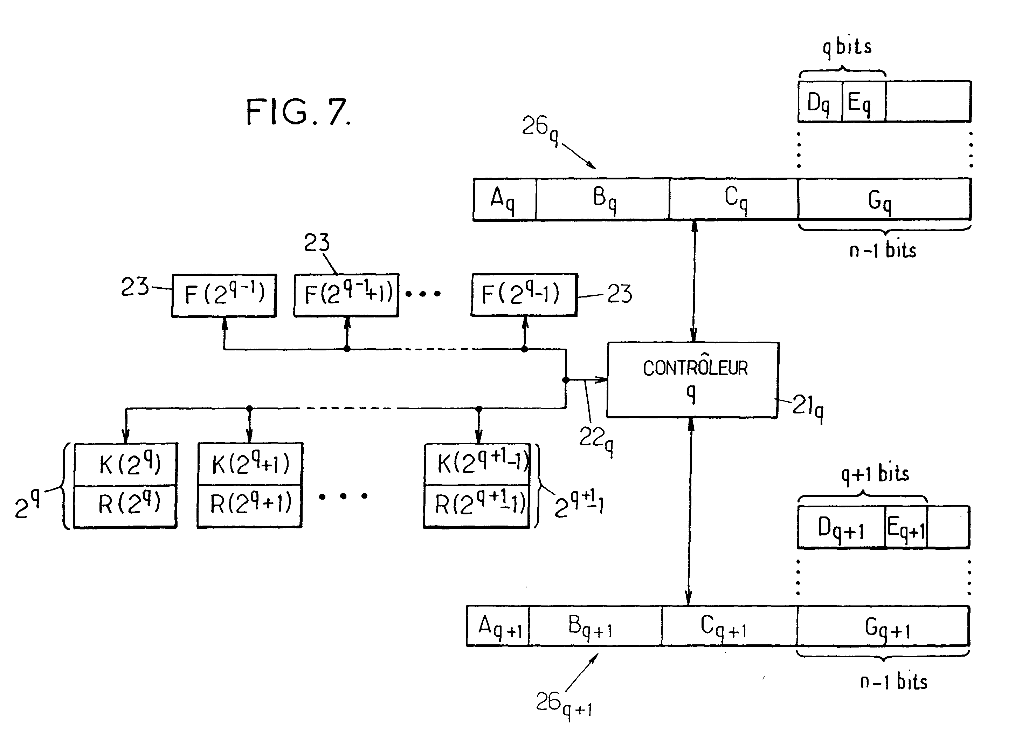

Les figures 7 à 11 illustrent un autre mode de réalisation d'un dispositif de tri.

Pour faciliter l'explication, on considère de nouveau le cas où chaque contrôleur 21_{q} est associé à un seul étage q de l'arbre binaire (m=n). On comprendra toutefois que, comme précédemment, l'architecture de ce dispositif de tri est aisément transposable au cas où un au moins des contrôleurs est associé à plusieurs étages (m<n).

Contrairement à l'exemple de réalisation précédemment décrit, celui des figures 7 à 11 n'utilise pas de compteurs différentiels pour propager les commandes d'insertion du sommet vers les feuilles de l'arbre. Chaque module de mémoire 20_{q} correspondant à un étage q de l'arbre comporte ainsi les noeuds 2^{q} à 2^{q+1}-1 et les emplacements 23 pour recevoir les bits d'orientation F(2^{q-1}) à F(2^{q}-1), mais pas d'emplacements 25 pour recevoir des compteurs différentiels, comme le montre la figure 7.

Chaque registre d'interface 26_{q} comporte, outre les quatre emplacements contenant les paramètres A_{q}, B_{q}, C_{q} et D_{q} précédemment définis, un emplacement supplémentaire recevant un bit E_{q} qui désigne, lors de la propagation d'une commande d'insertion depuis un noeud 1D_{q} de l'étage q-1, le noeud fils de l'étage q vers lequel est propagée cette commande. Ainsi, si E_{q}=0, la commande d'insertion est propagée vers le fils gauche 1D_{q}0, tandis que, si E_{q}=1, la commande d'insertion est propagée vers le fils droit 1D_{q}1.

Dans le registre 26_{q}, l'identification D_{q} du noeud père et le bit E_{q} de désignation du noeud fils sont constitués par les q bits de poids les plus forts du contenu G_{q} d'un champ de désignation de feuille de n-1 bits. Le contenu G_{q} de ce champ de désignation de feuille désigne, lors de la propagation d'une commande d'insertion, l'une des feuilles libres de l'arbre binaire en direction de laquelle est propagée cette commande. La représentation binaire de cette feuille libre est 1G_{q}. Etant donné que la feuille désignée est libre, on a l'assurance que l'élément inséré pourra trouver sa place sur le trajet allant du sommet de l'arbre à cette feuille libre désignée, à la condition qu'aucune autre commande d'insertion vers cette même feuille ne soit en cours de propagation en aval de l'arbre binaire.

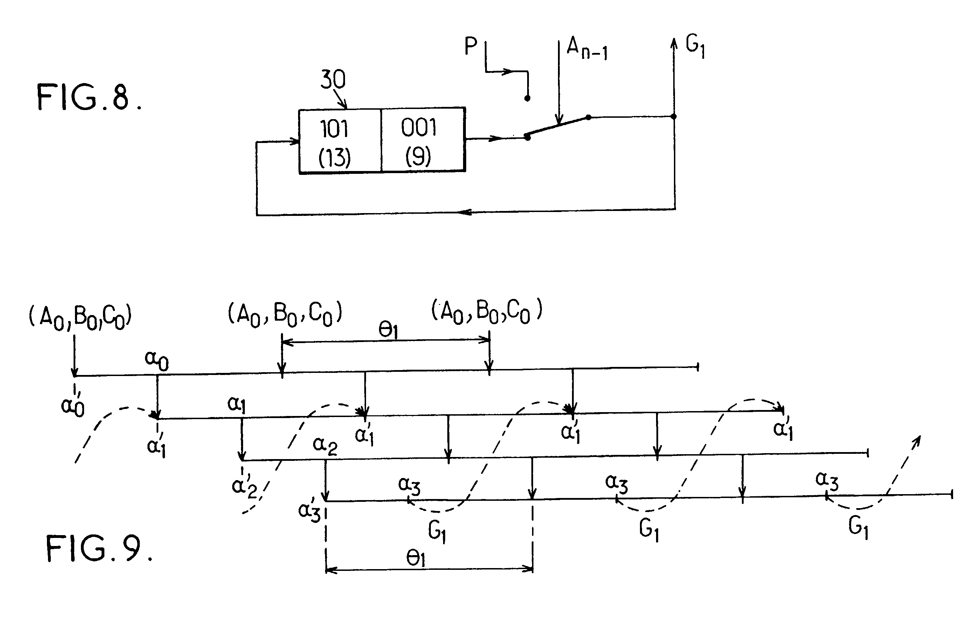

Pour remplir cette condition, le champ de désignation de feuille du registre 26₁ d'interface entre les étages 0 et 1 reçoit sa valeur G₁ du contrôleur 21ₙ₋₁ associé au dernier étage de l'arbre. Le contrôleur 21ₙ₋₁ tient une première liste de feuilles libres, par exemple au moyen d'un registre à décalage 30 tel que celui schématisé sur la figure 8. Ce registre contient un nombre n' d'emplacements de n-1 bits, et effectue une opération de décalage à chaque période de commande θ₁. Toute feuille en direction de laquelle une commande d'insertion est susceptible d'être en cours de propagation dans l'arbre binaire fait partie de cette première liste de n' feuilles libres. Tant que la commande Aₙ₋₁ lue par le dernier contrôleur dans le registre d'interface 26ₙ₋₁ n'est pas une commande d'insertion (Aₙ₋₁≠01), le registre à décalage 30 est rebouclé sur lui-même comme le montre la figure 8, de sorte qu'il délivre la même désignation de feuille toutes les n' périodes θ₁. Cette désignation G₁, dont on sait alors qu'elle est différente de chacune de celles des feuilles vers lesquelles des commandes d'insertion sont susceptibles d'être en cours de propagation dans l'arbre, est inscrite dans le champ correspondant du registre d'interface 26₁. Si par contre une commande d'insertion Aₙ₋₁=01 parvient au dernier étage de l'arbre, alors une nouvelle feuille libre P, extraite par le dernier contrôleur d'une seconde liste de feuilles libres d'une manière qui sera explicitée plus loin, est introduite dans le registre à décalage 30 et dans le registre d'interface 26₁.

Pour expliquer ce fonctionnement, la figure 9 reprend sous une forme simplifiée les chronogrammes de la figure 5 dans le cas où le dispositif traite consécutivement des commandes d'insertion de nouveaux éléments dans l'arbre. Sur cette figure 9, chaque extrémité de flèche désigne un instant α'_{q} de commencement du traitement d'une commande d'insertion par un contrôler 21_{q}. Ainsi, aux instants α'₀, le contrôleur 21₀ reçoit les commandes et paramètres pertinents A₀, B₀, C₀ depuis l'environnement du dispositif, et aux instants α'_{q} avec q≥1, le contrôleur 21_{q} reçoit les commandes et paramètres A_{q}, B_{q}, C_{q} et G_{q} dans le registre 26_{q} et démarre les traitements correspondants. Dans l'exemple d'organisation temporelle représenté sur la figure 9, chaque commande d'insertion pour laquelle le dernier contrôleur 21ₙ₋₁ a écrit la désignation correspondante G₁ d'une feuille libre dans le registre 26₁ parvient à ce dernier contrôleur dans le registre 26ₙ₋₁ au bout de deux périodes θ₁. En conséquence, dans cet exemple, il suffit de prendre n'=2 emplacements dans le registre à décalage 30.

Dans ce même exemple (voir aussi figure 1), la figure 8 montre les n'=2 feuilles 9 et 13 (respectivement désignées par 001 et 101 car les représentations binaires des numéros 9 et 13 sont 1001 et 1101) contenues dans la liste tenue dans le registre 30. La feuille 9 a donc été désignée dans le champ G₁ lors de l'avant-dernière commande. Si cette commande se rapporte à l'insertion d'un nouvel élément et aboutit à la feuille 9 (c'est-à-dire Aₙ₋₁=01 dans la période courante du fonctionnement du dernier processeur), la feuille 9 est supprimée de la liste et du registre 30, et remplacée par une nouvelle feuille (10, 11 ou 15 dans le cas de la figure 1) désignée par P. Sinon, ladite avant-dernière commande soit ne se rapporte pas à une insertion, soit se rapporte à l'insertion d'un élément de données qui a trouvé sa place en amont de l'étage n-1, de sorte que la feuille 9 est maintenue dans le registre 30 et de nouveau désignée dans le champ G₁ pour la prochaine commande.

Dans la pratique, le nombre n' pourra toujours être inférieur au nombre n d'étages dans l'arbre binaire. Etant donné que ce mode de réalisation du dispositif de tri implique que l'arbre binaire ait à chaque instant au moins n' feuilles libres, le nombre maximal d'éléments de données que le dispositif est capable de trier est réduit, par rapport au dispositif précédemment décrit, d'une quantité toujours inférieure à 2n', de sorte que la capacité de tri du dispositif n'est pas affectée de façon significative lorsque le nombre d'étages n'est pas trop faible. Si par exemple le dispositif comporte n=12 étages avec n'=4, il peut trier jusqu'à N=4095 éléments dans la cas d'utilisation de compteurs différentiels, et jusqu'à N=4088 éléments dans le cas d'utilisation de listes de feuilles libres, la différence entre ces deux valeurs de N n'étant pas significative.

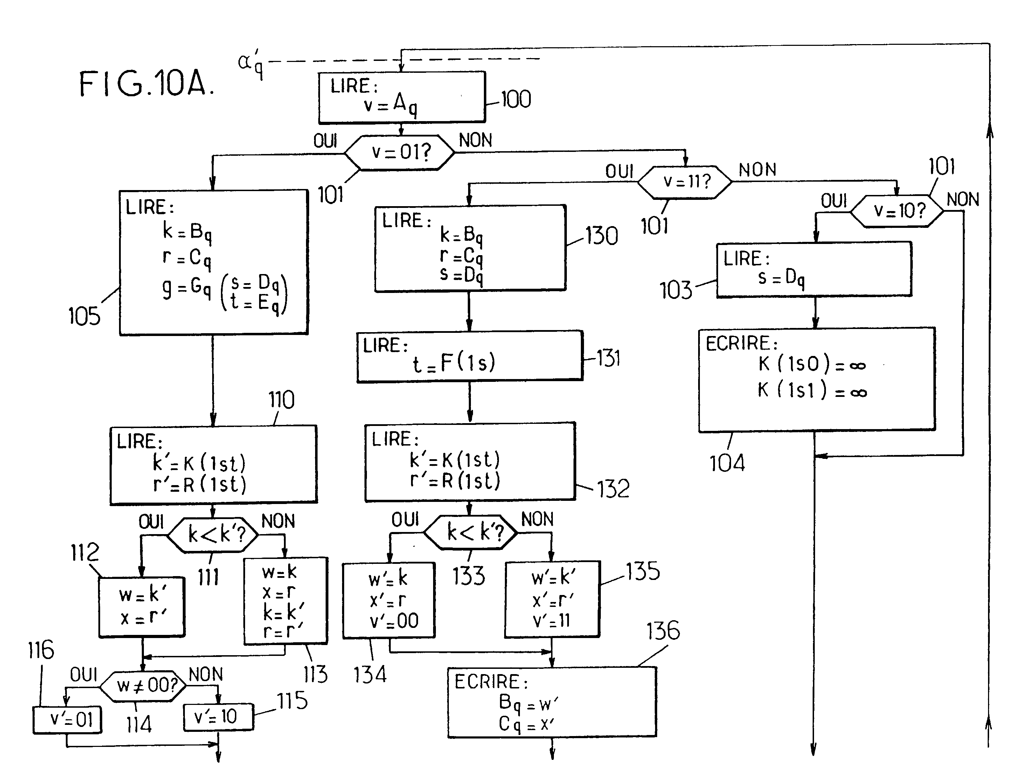

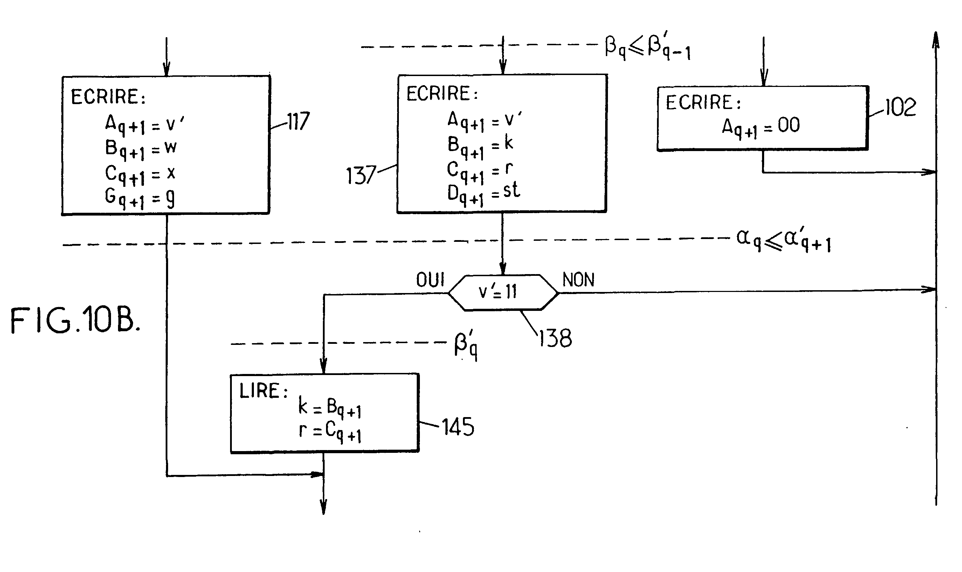

Les figures 10A et 10B, qui sont à compléter avec la figure 4C, montrent un organigramme semblable à celui des figures 4A à 4C (les mêmes références numériques ont été employées pour désigner des étapes semblables), et détaillant les opérations effectuées par un contrôleur 21_{q} du type représenté sur la figure 7, avec q<n-1, lors du traitement d'une commande.

Par rapport à l'organigramme des figures 4A, 4B et 4C, celui des figures 10A, 10B et 4C a été simplifié par la suppression de toutes les opérations se rapportant aux compteurs différentiels. Aux étapes 105 et 117 exécutées dans le traitement d'une commande d'insertion, c'est l'ensemble du champ de désignation de feuille G_{q} ou G_{q+1} qui est lu ou écrit dans le registre d'interface 26_{q} ou 26_{q+1}, et non seulement l'identification du noeud père D_{q} ou D_{q+1}. Par rapport à l'exemple précédent, on obtient une simplification de la structure des contrôleurs et une réduction de l'espace mémoire auquel chacun d'eux doit respectivement être capable d'accéder.

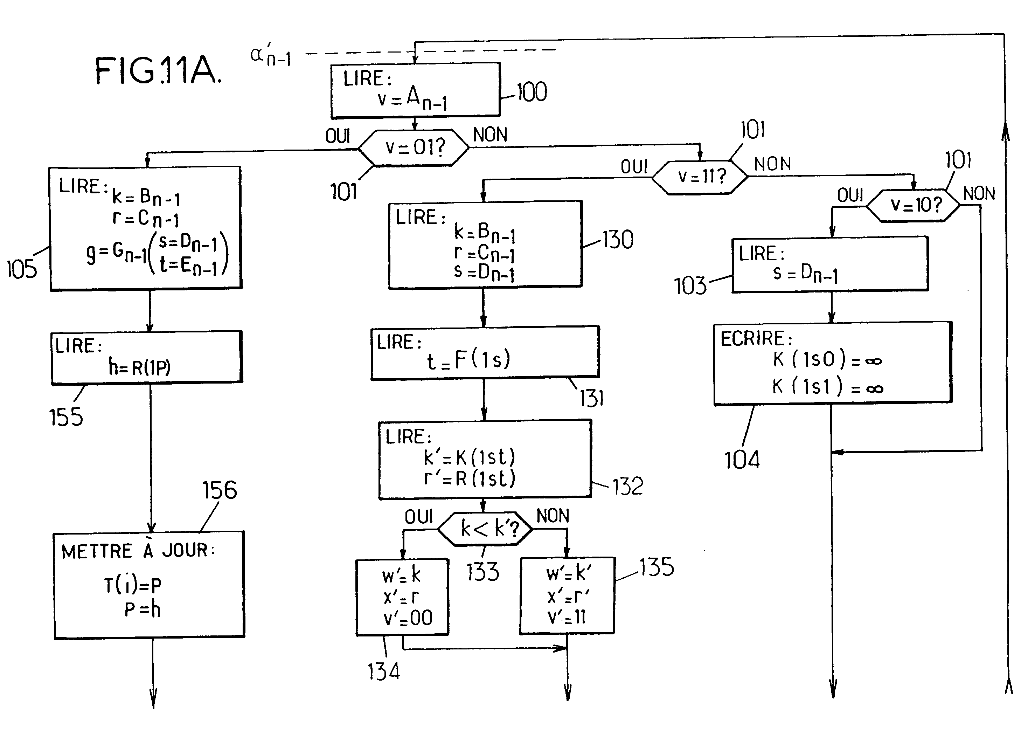

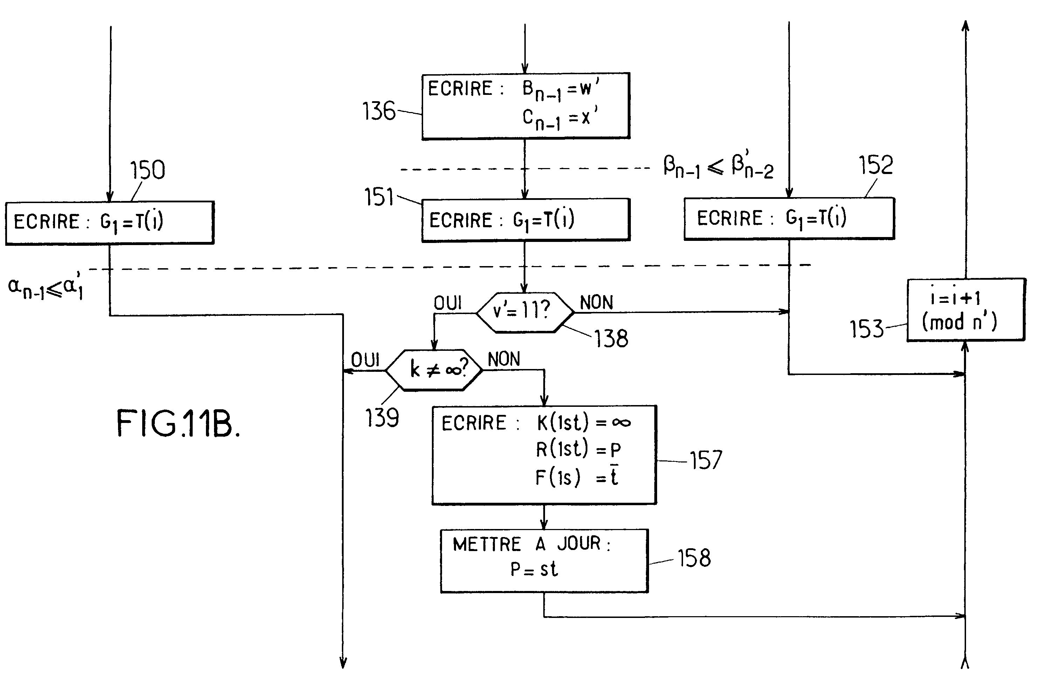

Les figures 11A et 11B, qui sont à compléter avec la figure 4C, montrent les opérations effectuées par le dernier contrôleur relativement à l'étage n-1 de l'arbre. L'étape 150, 151 ou 152, exécutée entre les instants βₙ₋₁ et αₙ₋₁ correspond à l'écriture, dans le champ de désignation de feuille du registre 26₁, des n-1 bits de poids les plus faibles G₁=T(i) du numéro de la feuille de rang i (0≤i<n') dans la liste de feuilles libres correspondant au contenu du registre à décalage 30 illustré sur la figure 8. Le traitement de chacune des commandes relativement au dernier étage n-1 se termine dans tous les cas par une incrémentation, modulo n', du compteur i à l'étape 153, ce qui correspond à une opération de décalage dans le registre 30.

Le contrôleur 21ₙ₋₁ tient en outre une seconde liste de feuilles libres, qu'il gère par exemple en mode dernier entré-premier sorti (LIFO). La première feuille de cette seconde liste est désignée par un pointeur P de n-1 bits stocké dans un registre du dernier contrôleur ou dans sa zone de mémoire 20ₙ₋₁. La représentation binaire du numéro de cette première feuille est 1P. Chaque feuille de la seconde liste contient un élément de données dont la clé de tri est infinie, et on utilise par exemple la portion de mémoire correspondant à la référence associée pour stocker un pointeur de suite égal à la désignation sur n-1 bits de la feuille suivante de la seconde liste (on pourrait également utiliser la portion correspondant à la clé si un bit est réservé pour identifier les clés infinies).

Lorsqu'une commande d'insertion parvient au contrôleur du dernier étage dans le registre d'interface 26ₙ₋₁ (Aₙ₋₁=01), la feuille libre désignée par Gₙ₋₁ doit être remplie pour contenir le nouvel élément de données. En conséquence, les étapes 110 à 117 de l'organigramme des figures 10A et 10B ne sont pas nécessaires. L'étape de lecture 105 est suivie par une étape 155 où le contrôleur 21ₙ₋₁ lit dans la variable h le pointeur de suite R(1P) contenu dans la portion de mémoire correspondant à la référence de l'élément contenu dans la première feuille libre de la seconde liste (étape 155). A l'étape suivante 156, le contrôleur 26ₙ₋₁ met à jour les deux listes de feuilles libres. Il retire de la première liste la feuille libre désignée par Gₙ₋₁, en la remplaçant, dans la zone T(i) par le pointeur P de la première feuille de la seconde liste ; il remplace ensuite cette valeur P par celle du pointeur lu à l'étape 155. Le processeur 21ₙ₋₁ termine de traiter la commande d'insertion en procédant à l'étape 150 précitée puis aux étapes 119 à 126 de la figure 4C et à l'étape 153.

Pour traiter une commande d'échange (Aₙ₋₁=11), le contrôleur du dernier étage exécute d'abord les étapes 130 à 136 précédemment commentées. L'étape 137 n'est pas nécessaire, et est remplacée par l'étape 151 précitée. Si la clé de tri k=Bₙ₋₁ proposée en échange depuis l'étage n-2 est plus grande que celle K(1st) lue dans la feuille traitée (v'=11 lors de la comparaison 138), cette clé k est comparée à l'infini à l'étape 139. Si cette clé k est finie, le traitement de la commande d'échange se termine par les étapes 119 à 126 de la figure 4C et par l'étape 153. Sinon, la commande se rapporte à une extraction simple, et libère une feuille précédemment occupée. A l'étape 157, cette feuille est mise à jour en y écrivant une clé de tri infinie et, à titre de référence, la valeur P du pointeur de la première feuille de la seconde liste. Le bit d'orientation associé F(1s) reçoit la valeur complémentaire de celle lue à l'étape 131. Avant de passer à l'étape finale 153, le contrôleur 26ₙ₋₁ termine le traitement de la commande d'extraction à l'étape 158 en mettant à jour le pointeur P de la première feuille de la seconde liste avec la désignation binaire st de la feuille libérée.

A l'initialisation du dispositif selon les figures 7 à 11, les deux listes de feuilles libres sont par exemple initialisées de la manière suivante : T(i)=i, en base 2, pour 0≤i<n'; P=n', en base 2 ; et R(1i)=i+1, en base 2, pour n'≤i<2ⁿ⁻¹.

Dans l'exemple d'implémentation illustré par les figures 8, 11A et 11B, le dernier contrôleur 21ₙ₋₁ tient la "première liste" et la "seconde liste" au moyen d'un registre à décalage 30 et d'une pile LIFO. On notera que d'autres organisations logiques de complexité comparable pourraient être adoptées. Par exemple, le contrôleur 21ₙ₋₁ pourrait tenir une file d'attente logique gérée en mode premier entré-premier sorti (FIFO), contenant les numéros des feuilles libres, en s'assurant que cette file d'attente FIFO contient toujours au moins n' numéros de feuilles libres. Dans ces conditions, la "première liste" est constituée par les n' derniers emplacements de la file d'attente, et la "seconde liste" par les emplacements précédents de la file d'attente.

Dans les dispositifs de tri décrits ci-dessus, la relation d'ordre selon laquelle les clés sont triées, c'est-à-dire comparées entre elles aux étapes 111, 122, 123 et 133, correspond à l'ordre croissant des entiers naturels. On comprendra que n'importe quelle relation d'ordre pour laquelle des comparaisons sont aisément réalisées au moyen de circuits logiques simples pourrait être utilisée pour trier les éléments dans un tel dispositif.

Si, par exemple, chaque clé de tri K(i) est une étiquette temporelle définissant un instant futur où on aura besoin d'aller chercher la référence correspondante R(i) de l'élément de données, le dispositif de tri peut servir de dispositif de temporisation pour contrôler l'ordonnancement temporel de processus. La clé de l'élément situé au sommet de l'arbre est alors comparée à l'instant courant pour échanger ou extraire cet élément si l'instant courant est atteint.

Si, dans cette application, les valeurs de temps sont codées sur L bits par un compteur cyclique variant de 0 à 2^{L}-1, la relation d'ordre entre deux clés k et k' de L bits peut être : k≤k' si et seulement si 0≤(k'-k) (mod 2^{L}) <2^{L-1}. En d'autres termes, il suffit, à l'étape 122 par exemple, de calculer la différence k'-k sur L bits (c'est-à-dire en ignorant la retenue de poids le plus fort), et d'examiner si le bit de poids 2^{L-1} de cette différence est 0 (k≤k') ou 1 (k>k'). L'ordre chronologique des clés est alors respecté pourvu qu'aucune clé ne désigne un instant antérieur de plus de 2^{L-1} ou postérieur de plus de 2^{L-1}-1 à l'instant courant, une condition facile à remplir par le choix d'un nombre L suffisamment grand.

On va maintenant décrire une application des dispositifs de tri décrits ci-dessus dans un espaceur de cellules ATM.

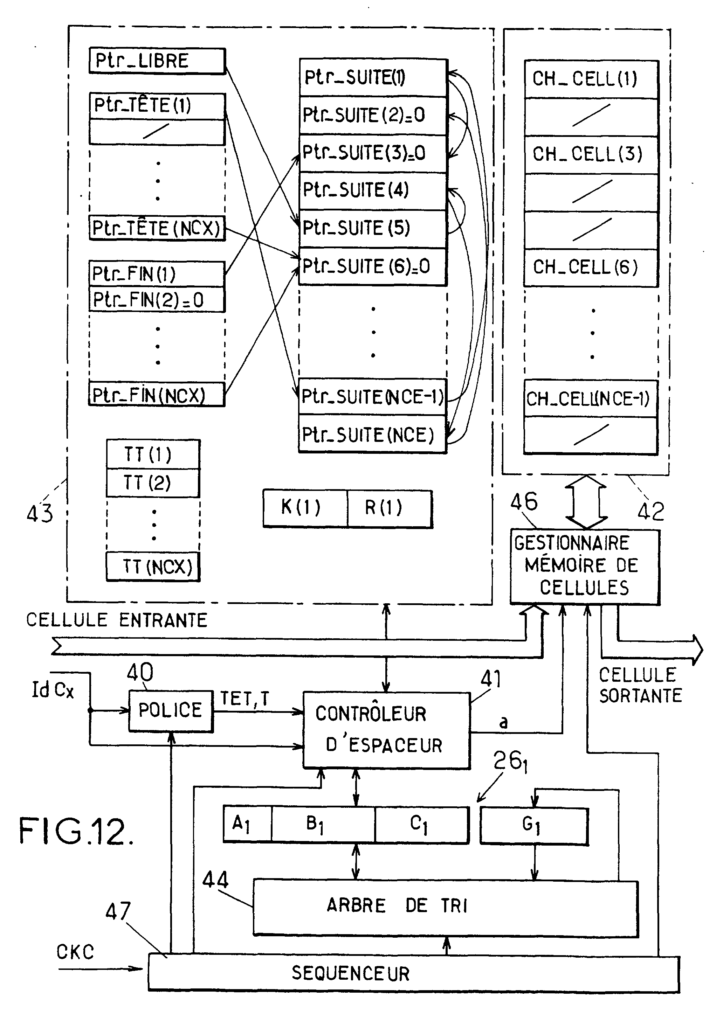

Dans l'espaceur de la figure 12, la fonction de police est assurée par un module 40 sur la base de l'heure courante et de l'identité IdCx de la connexion dont relève chaque cellule entrante. Ce module 40 délivre au contrôleur d'espacement 41 l'heure théorique d'émission TET calculée de façon récursive pour chaque cellule ainsi que l'intervalle d'espacement T associé à la connexion dont relève cette cellule. Sur la base de ces informations et des identités de connexion IdCx, le contrôleur d'espacement 41 supervise la gestion de la mémoire de cellules 42 dans laquelle les cellules entrantes sont écrites et les cellules sortantes sont lues, et gère en outre une mémoire de pointeurs 43 et le dispositif de tri 44.

On désigne par NCX le nombre de connexions virtuelles, numérotées de IdCx=1 à IdCx=NCX, que l'espaceur est capable de traiter, et par NCE le nombre de cellules que la mémoire 42 est capable de contenir, dans des emplacements prédéfinis Ch_cell(1) à Ch_cell(NCE).

Dans l'exemple de réalisation représenté, la mémoire de cellules 42 et la mémoire de pointeurs 43 consistent en deux modules de mémoires distincts, dont le premier est géré par une unité 46 sous le contrôle du contrôleur 41. On comprendra toutefois que d'autres formes de réalisation sont possibles. En particulier, les mémoires 42 et 43 pourraient être implémentées dans un seul module de mémoire dans lequel les accès seraient commandés par le contrôleur 41. C'est ainsi qu'un module de mémoire RAM de 2 mégaoctets permet par exemple de stocker jusqu'à NCE=32 000 cellules relevant de NCX=4 096 connexions virtuelles différentes ainsi que les pointeurs nécessaires à la gestion de la mémoire de cellules.

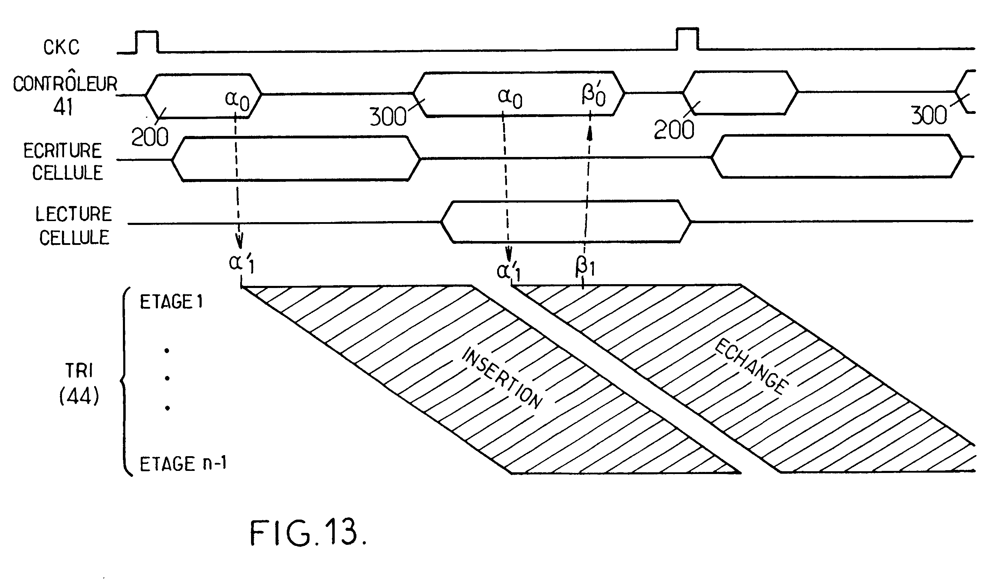

La figure 13 montre un signal d'horloge-cellule CKC sur la base duquel un séquenceur 47 de l'espaceur fournit les signaux de cadencement nécessaires au module 40, au contrôleur d'espacement 41, au dispositif de tri 44 et au gestionnaire 46 de la mémoire de cellules (figure 12). La période de ce signal d'horloge est de 2,7 µs dans le cas d'une liaison à 155 Mbit/s. A chaque période de ce signal CKC, l'espaceur doit être capable de recevoir une cellule écrite dans la mémoire 42 (troisième ligne de la figure 13), et d'émettre une cellule lue dans la mémoire 42 (quatrième ligne de la figure 13). Dans l'exemple de cadencement représenté sur la figure 13, chaque période de cellule est divisée en deux phases successives de même durée, la première pour la réception éventuelle d'une cellule entrante et la seconde pour l'émission éventuelle d'une cellule sortante.

Dans la première phase de chaque période de cellule, le contrôleur d'espacement 41 fournit au gestionnaire 46 une adresse de départ a dans la mémoire de cellules 42, à partir de laquelle celui-ci commande l'écriture des 53 octets de la cellule entrante. Dans la seconde phase, l'adresse de départ a fournie par le contrôleur 41 sert au gestionnaire 46 pour commander la lecture des 53 octets stockés à partir de l'adresse a dans la mémoire 42 afin de délivrer la cellule sortante. Aux fins du présent exposé, on considérera que l'adresse a correspond au numéro de l'emplacement Ch_cell(a) de la mémoire 42 (1≤a≤NCE) dans lequel la cellule est écrite ou lue, et que, par convention, a=0 signifie au gestionnaire 46 qu'il ne doit pas commander d'accès dans la mémoire 42 dans la phase considérée (pas de cellule entrante, ou aucune cellule à émettre, au cours de la période de cellule).

La mémoire de cellules 42 est organisée de façon à contenir, pour chaque connexion virtuelle pour laquelle elle contient des cellules, une liste d'emplacements où ces cellules sont rangées en mode premier entré-premier sorti (FIFO). Ces listes sont gérées par le contrôleur 41 au moyen de la mémoire de pointeurs 43.

Les pointeurs de la mémoire 43 comprennent un pointeur d'emplacement libre Ptr_libre, NCX pointeurs de tête de liste Ptr_tête(IdCx) pour 1≤IdCx≤NCX, NCX pointeurs de fin de liste Ptr_fin(IdCx) pour 1≤IdCx≤NCX, et NCE pointeurs de suite Ptr_suite(i) pour 1≤i≤NCE, respectivement associés aux emplacements Ch_cell(1) à Ch_cell(NCE). Chaque identité IdCx d'une connexion virtuelle pour laquelle la mémoire 42 ne contient aucune cellule à un instant donné a son pointeur de fin de liste Ptr_fin(IdCx) à zéro à cet instant, indiquant une liste vide (c'est le cas pour IdCx=2 dans l'exemple représenté sur la figure 12). Sinon, le numéro i de l'emplacement Ch_cell(i) où est stockée la cellule reçue depuis le plus longtemps selon la connexion IdCx est égal au pointeur de tête de liste Ptr_tête(IdCx), et le numéro de celui où est stockée la cellule reçue depuis le moins longtemps selon la connexion IdCx est égal au pointeur de fin de liste Ptr_fin(IdCx). La liste FIFO relative à une connexion IdCx est chaînée au moyen des pointeurs de suite : le pointeur de suite Ptr_suite(i) associé à un emplacement Ch_cell(i) qui n'est pas une fin de liste désigne l'emplacement Ch_cell(Ptr_suite(i)) qui lui fait suite dans sa liste. Si l'emplacement Ch_cell(i) est une fin de liste, alors on impose Ptr_suite(i)=0. Dans l'exemple de la figure 12, la liste relative à IdCx=1 est Ch_cell(NCE-1), Ch_cell(1) et Ch_cell(3), et celle relative à IdCx=NCX se réduit à l'emplacement Ch_cell(6). Les emplacements de la mémoire 42 qui ne sont pas occupés par des cellules à émettre forment une liste LIFO d'emplacements libres, dont le premier est désigné par le pointeur Ptr_libre et les suivants par les pointeurs de suite successifs. Dans l'exemple de la figure 12, la liste d'emplacements libres est, dans l'ordre de sortie, Ch_cell(5), Ch_cell(NCE) et Ch_cell(2).

Le sommet de l'arbre de tri de l'espaceur de la figure 12 est accessible par le contrôleur d'espacement 41, qui assure les traitements du contrôleur 21₀ associé à l'étage 0 (figures 2 à 11). L'élément de données K(1), R(1) situé au sommet de l'arbre peut alors être stocké dans la mémoire de pointeurs 43 comme représenté, ou encore dans un registre spécial du contrôleur 41. Le contrôleur 41 échange les commandes et paramètres avec les étages 1 à n-1 du dispositif de tri 44 par l'intermédiaire du registre d'interface 26₁ qui, dans l'exemple considéré, est conforme à celui décrit en référence à la figure 7.

Chaque élément de données fourni au dispositif de tri 44 consiste, pour la clé de tri K(i), en l'heure théorique d'émission d'une cellule stockée dans un emplacement de la mémoire 42 constituant une tête de liste, et pour la référence R(i), en l'identité IdCx de la connexion virtuelle dont relève cette cellule. La clé K(i) est donc une étiquette temporelle qui peut être définie, comme expliqué précédemment, par un compteur cyclique de L bits. Un compteur de L=16 bits par exemple, plus un bit pour distinguer les clés infinies, convient pour l'application à un espaceur ATM. Les références R(i) peuvent être sur 12 bits pour NCX=4096 connexions.

Si l'espaceur est un espaceur réel, le contrôleur 41 compare la clé K(1) présente au sommet de l'arbre avec l'instant courant ta, et fournit a=Ptr_tête(R(1)) au gestionnaire 46 si K(1)≤ta pour que soit émise la cellule qui, parmi celles situées dans des têtes de listes, a la plus petite heure théorique d'émission. Dans le cas d'un espaceur virtuel, le contrôleur 41 agit de la même manière, mais sans comparaison à l'instant courant : une cellule est émise à chaque période dès lors que K(1)<∞.

A l'arrivée d'une cellule relevant d'une connexion IdCx dont la liste d'emplacements est vide (Ptr_fin(IdCx)=0), cette cellule est stockée à l'emplacement Ch_cell(Ptr_libre), la liste des emplacements libres est mise à jour, et le contrôleur 41 commande l'insertion dans l'arbre de tri d'un élément de données dont la référence correspond à cet IdCx et dont la clé de tri est le TET calculé par le module 40 pour cette cellule.

L'arrivée d'une cellule relevant d'une connexion IdCx dont la liste d'emplacements n'est pas vide ne modifie pas le contenu de l'arbre de tri, et nécessite seulement un stockage à l'emplacement Ch_cell(Ptr_libre), et une mise à jour de la liste des emplacements libres et de la liste associée à la connexion IdCx.

L'émission d'une cellule relevant d'une connexion IdCx dont la liste d'emplacements contient cette seule cellule entraîne l'extraction simple de l'élément correspondant de l'arbre de tri, qui revient à un échange avec un élément de clé infinie.

L'émission d'une cellule relevant d'une connexion IdCx dont la liste d'emplacements contient une ou plusieurs cellules après celle-ci entraîne l'échange entre l'élément correspondant de l'arbre et un nouvel élément dont la référence correspond à cet IdCx et dont la clé de tri est le temps théorique d'émission affecté à la cellule stockée en seconde position dans la liste, c'est-à-dire à l'emplacement Ch_cell(Ptr_suite(Ptr_tête(IdCx))).

Dans ce dernier cas, l'heure théorique d'émission formant la clé du nouvel élément peut être celle fournie par le module 40 pour la cellule stockée dans la nouvelle tête de liste. Il est alors utile de mémoriser les heures TET fournies par le module 40 au fur et à mesure de l'arrivée des cellules. Mais, il est préférable que le contrôleur 41 recalcule une heure théorique d'émission de la cellule au moment où il fournit le nouvel élément de données au dispositif de tri 44.

A cette fin, la mémoire 43 contient un tableau dans lequel sont stockées les valeurs TT(IdCx) des intervalles d'espacement T alloués aux différentes connexions virtuelles IdCx, valeurs que le contrôleur 41 reçoit du module 40 aux moments où des cellules arrivent selon les connexions concernées. Lorsque K(1)≤ta, l'espaceur réel émet la cellule stockée dans Ch_cell_(Ptr_tête(R(1))), et commande dans l'arbre de tri un échange de l'élément K(1), R(1) situé au sommet avec un nouvel élément K(1)+TT(R(1)), R(1). En d'autres termes, l'heure théorique d'émission de la cellule stockée dans la nouvelle tête de liste est prise égale à celle de la cellule émise augmentée de l'intervalle de temps TT(IdCx) alloué à la connexion concernée.

Cette façon de procéder présente deux avantages. Le premier est que si le module 40 affecte à deux cellules consécutives relevant d'une connexion IdCx des heures théoriques d'émission TET distantes de plus que TT(IdCx) en raison de leurs heures d'arrivée respectives et si la seconde de ces deux cellules est déjà écrite dans la mémoire 42 au moment où la première est émise, alors on peut avancer l'heure théorique d'émission de la seconde cellule par rapport à celle calculée par le module 40 ainsi que les heures théoriques d'émission de cellules suivantes de la connexion sans nuire aux propriétés d'espacement requises. On évite donc de retarder inutilement certaines cellules.

Le second avantage est qu'on peut modifier dynamiquement et de façon immédiate les intervalles d'espacement alloués à certaines connexions. Lorsque l'encombrement de la liaison risque de provoquer une congestion, l'équipement peut par exemple augmenter l'intervalle d'espacement de certaines connexions virtuelles. Cette augmentation prend effet immédiatement, y compris pour les cellules de cette connexion contenues dans la mémoire 42 qui ne seront donc pas émises conformément à leurs TET initialement calculés. On évite ainsi un retard dans l'application des mesures préventives, retard qui pourrait conduire à ce que la congestion ne soit pas évitée. Bien entendu, l'autorisation d'augmenter l'intervalle d'espacement d'une connexion doit être convenue avec la source à l'établissement de cette connexion étant donné que, pour une même tolérance de CDV et un même comportement de la source, elle augmente la probabilité de destruction de cellules par la fonction de police.

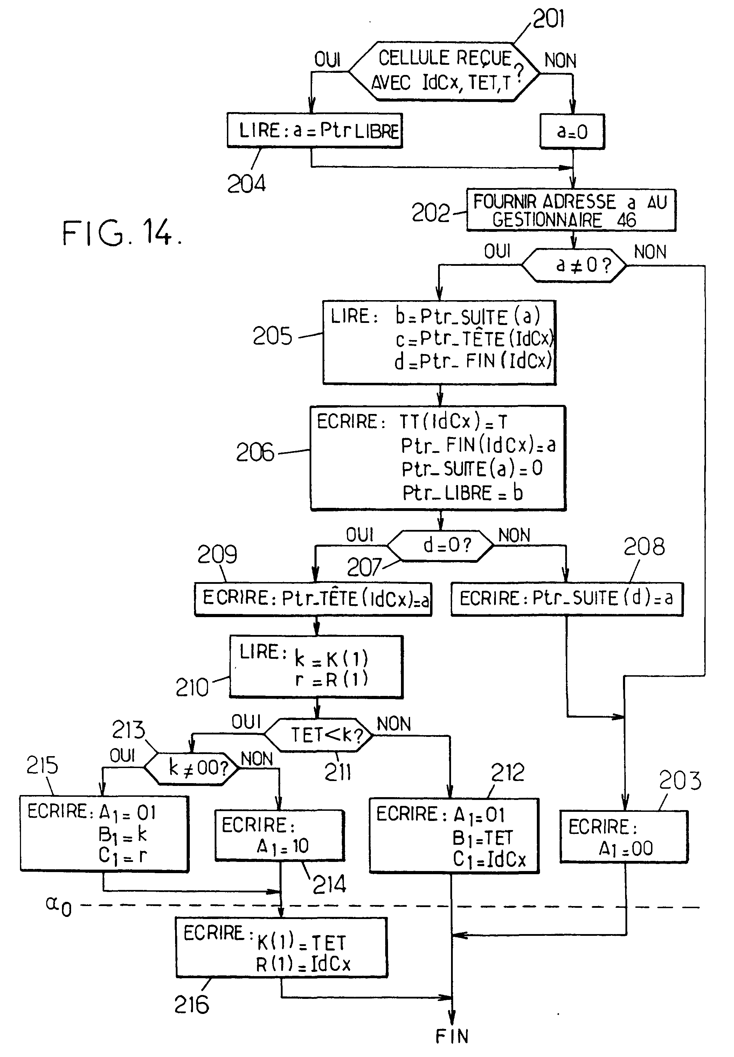

La figure 14 montre les opérations effectuées par le contrôleur 41 dans la première phase de chaque période de cellule, pendant les intervalles de temps 200 indiqués sur la seconde ligne de la figure 13.

La première étape 201 consiste à déterminer si une cellule entrante parvient à l'espaceur pendant la période de cellule en question, et le cas échéant à acquérir l'identité IdCx de la connexion dont relève cette cellule ainsi que l'heure théorique d'émission TET et l'intervalle d'espacement T fourni pour cette cellule par le module 40.

En l'absence de réception d'une cellule entrante, l'adresse a=0 est fournie au gestionnaire 46 de la mémoire de cellules à l'étape 202, puis le contrôleur 41 écrit dans le registre d'interface 26₁ une commande d'absence de modification du contenu de l'arbre binaire (A₁=00) à l'étape 203.

En présence d'une cellule entrante, le pointeur d'emplacement libre Ptr_libre est lu dans la mémoire de pointeurs 43 à l'étape 204, et affecté à l'adresse a qui est fournie au gestionnaire 46 à l'étape 202. Si a=0 (pas de cellule reçue ou plus d'emplacement libre dans la mémoire 42), le gestionnaire 46 ne procède à aucune écriture dans la mémoire 42 dans la période de cellule courante, et le contrôleur d'espacement 41 exécute l'étape 203 précitée pour que le contenu de l'arbre binaire reste inchangé. Sinon, le contrôleur 41 passe à l'étape 205 de lecture de pointeurs.

A l'étape 205, le numéro Ptr_suite(a) du second emplacement de la liste d'emplacements libres, le numéro Ptr_tête(IdCx) de la tête de liste relative à la connexion IdCx et le pointeur Ptr_fin(IdCx) de cette liste sont respectivement affectés aux variables b, c et d. A l'étape 206, le tableau TT des intervalles d'espacement est mis à jour pour la connexion IdCx selon la valeur T reçue du module 40, l'adresse a est écrite dans la mémoire 43 en tant que pointeur de fin de la liste d'emplacements relative à la connexion IdCx, le pointeur de suite Ptr_suite(a) associé à cet emplacement est mis à zéro pour indiquer qu'il s'agit désormais d'une fin de liste, et le pointeur d'emplacement libre Ptr_libre est mis à jour avec la variable b.

Si la liste d'emplacements relative à la connexion IdCx n'était pas vide (c'est-à-dire si d≠0 lors de la comparaison 207), aucune modification du contenu de l'arbre de tri n'est nécessaire comme expliqué précédemment, de sorte que le contrôleur d'espacement 41 exécute l'étape 203 précitée après avoir mis à jour le pointeur de suite associé à la précédente fin de liste avec l'ancien pointeur d'emplacement libre à l'étape 208 : Ptr_suite(d)=a.

Si la comparaison 207 montre que d=0, le contrôleur 41 achève la mise à jour des pointeurs de liste à l'étape 209 en écrivant Ptr_tête(IdCx)=a. Il procède ensuite à l'insertion du nouvel élément de données TET, IdCx dans l'arbre de tri. Les opérations qu'il effectue pour cela correspondent à celles effectuées par le contrôleur 26₀ de l'étage 0 de l'arbre binaire, c'est-à-dire aux étapes 110 à 119 de l'organigramme des figures 10A, 10B et 4C. A l'étape 210, le contrôleur 41 affecte aux variables k et r la clé de tri K(1) et la référence R(1) de l'élément de données lu au sommet de l'arbre, puis il compare la clé k à l'heure théorique d'émission TET reçue du module 40 à l'étape 201 (comparaison 211). Si TET≥k, la commande d'insertion doit être propagée vers l'étage 1 de l'arbre de tri, de sorte que le contrôleur 41 écrit A₁=01, B₁=TET et C₁=IdCx dans le registre pipe-line 26₁ à l'étape 212, le champ de désignation de feuille du registre 26₁ recevant le numéro d'une feuille libre G₁ depuis le dernier contrôleur 21ₙ₋₁ du dispositif de tri 44, comme indiqué sur la figure 12.

Si la comparaison 211 montre que TET<k, alors le nouvel élément de donnée TET, IdCx est à écrire au sommet de l'arbre, ce qui est effectué à l'étape 216. Auparavant, le contrôleur 41 propage une commande de réinitialisation A₁=10 dans le registre pipe-line 26₁ à l'étape 214 si la clé de tri k précédemment située au sommet de l'arbre est infinie (comparaison 213). Sinon, le contrôleur 41 écrit dans le registre 26₁ une commande d'insertion (A₁=01) de l'élément B₁=k, C₁=r précédemment situé au sommet à l'étape 215.

En ce qui concerne la synchronisation du contrôleur 41 avec ceux du dispositif de tri 44, la figure 14 montre que l'instant α₀ correspondant à celui dont il a été question en référence aux figures 5 et 9, se trouve après l'étape 203, 212, 214 ou 215 d'écriture par le contrôleur 41 dans le registre pipe-line 26₁. A compter de cet instant α₀, le contrôleur 21₁ de l'étage 1 peut commencer à traiter la commande (instant α'₁ indiqué sur la figure 13).

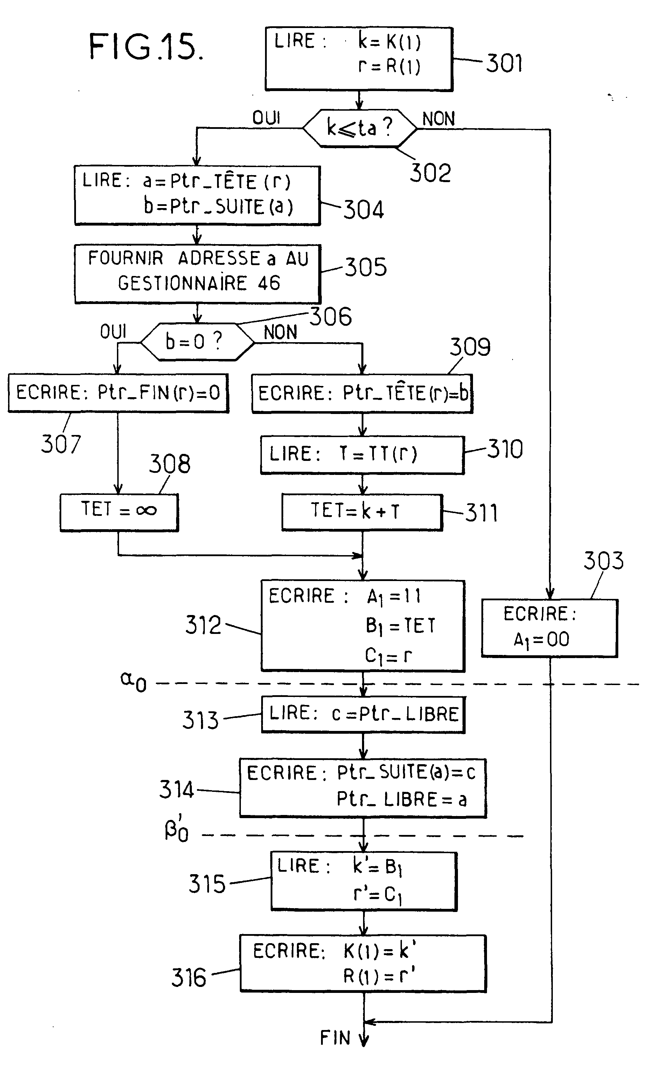

La figure 15 montre les opérations effectuées par le contrôleur 41 dans la seconde phase de chaque période de cellule, pendant les intervalles de temps 300 indiqués sur la seconde ligne de la figure 13.

La première étape 301 consiste à lire la clé de tri K(1) et la référence R(1) de l'élément de données situé au sommet de l'arbre, et à les affecter respectivement aux variables k et r. La comparaison suivante 302 sert à décider si une cellule est à émettre ou non. Dans le cas d'un espaceur réel, cette étape 302 consiste à comparer la clé de tri k à l'heure courante ta. Dans le cas d'un espaceur virtuel, elle consiste simplement à examiner si la clé k est finie ou infinie. Si k>ta (cas d'un espaceur réel), le contrôleur 41 n'effectue aucune opération dans la seconde phase de la période de cellule, sauf l'écriture dans le registre pipe-line 26₁ d'une commande A₁=00 d'absence de modification du contenu de l'arbre binaire (étape 303).

S'il ressort de l'étape 302 qu'une cellule est à émettre, le numéro de l'emplacement situé en tête de liste relativement à la connexion r, ainsi que le pointeur de suite associé à cet emplacement sont lus dans la mémoire 43 et respectivement affectés aux variables a et b à l'étape 304. L'adresse a peut alors être fournie au gestionnaire 46 à l'étape 305 pour que celui-ci émette la cellule stockée à cette adresse (quatrième ligne de la figure 13). Si la liste d'emplacements relative à la connexion r=R(1) identifiée dans l'élément situé au sommet de l'arbre ne contenait qu'une seule cellule, alors la variable b est à 0. Ceci est détecté par la comparaison 306. Dans ce cas, le pointeur de fin de liste Ptr_fin(r) est mis à zéro à l'étape 307 pour indiquer que cette liste ne contient plus aucune cellule, et à l'étape 308 une valeur infinie est affectée à l'heure théorique d'émission TET qui constituera la clé de tri du nouvel élément à échanger dans l'arbre binaire.

Si b≠0 à l'étape 306, la liste d'emplacements contient plusieurs cellules, et la variable b est écrite à l'étape 309 en tant que pointeur de tête de cette liste, et, à l'étape 311, la cellule stockée dans l'emplacement Ch_cell(b) reçoit une nouvelle heure théorique d'émission TET égale à la clé k=K(1) lue à l'étape 301, augmentée d'une variable T prise égale à l'intervalle d'espacement TT(r) de la connexion concernée, lu à l'étape 310. La commande d'échange (A₁=11) de l'élément K(1), R(1) situé au sommet de l'arbre avec le nouvel élément B₁=TET, C₁=r est écrite dans le registre pipe-line 26₁ à l'étape 312.

L'instant α₀ à partir duquel le contrôleur 21₁ du dispositif de tri 44 peut commencer à traiter la commande se situe après l'étape 312 (ou l'étape 303), comme le montre la figure 15. Le contrôleur d'espacement 41 doit attendre l'instant β'₀≥β₁ (voir figure 13) avant de récupérer dans le registre 26₁ l'élément retourné depuis l'étage 1 de l'arbre de tri. Dans l'exemple illusté par la figure 15, le contrôleur 41 met à jour la liste d'emplacements libres dans l'intervalle [α_{0,} β'₀] : à l'étape 313, il lit le pointeur d'emplacement libre Ptr_libre et l'affecte à la variable c; puis, à l'étape 314, il écrit dans la mémoire 43 Ptr_suite(a) =c et Ptr_libre=a.

Une fois que le contrôleur de l'étage 1 de l'arbre a retourné l'élément ayant la plus petite clé dans le registre 26₁, cet élément est lu par le contrôleur 41 à l'étape 315, puis écrit au sommet de l'arbre à l'étape 316.

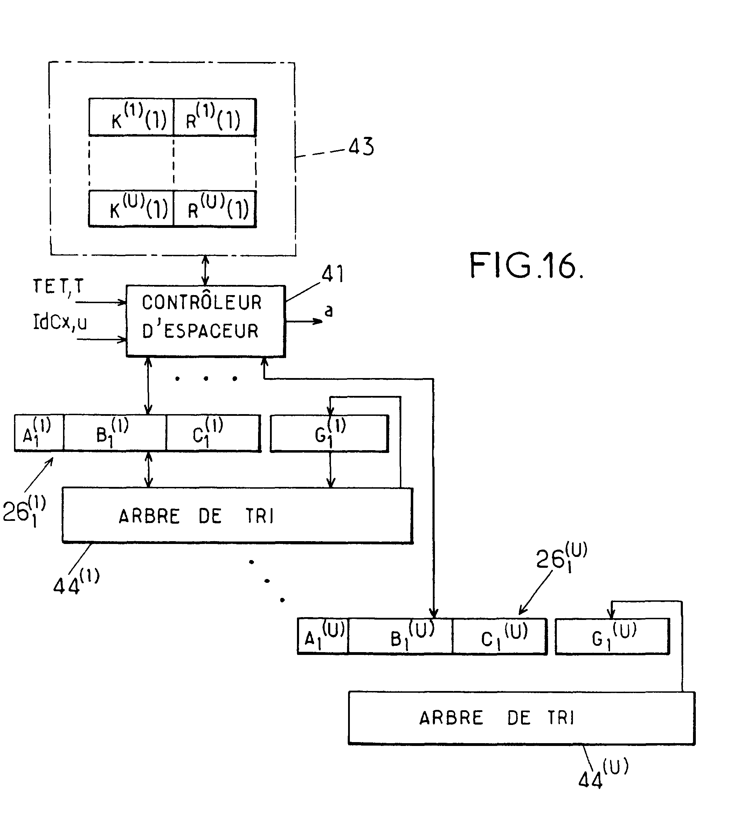

La figure 16 montre une variante d'espaceur de cellules ATM capable de tenir compte d'index de priorité affectés aux connexions virtuelles. On note u cet index de priorité, dont on suppose qu'il prend ses valeurs entre 1 et U. L'espaceur de la figure 16 comporte U dispositifs de tri 44^{(u)} ayant chacun un registre pipe-line 26₁^{(u)} entre son étage 0 et son étage 1. Le fonctionnement de chaque dispositif de tri 44^{(u)} est le même que celui précédemment décrit. Le sommet de chaque arbre binaire est supposé contenu dans la mémoire de pointeurs 43 (dont le reste du contenu n'est pas représenté sur la figure 16) et géré par le contrôleur d'espacement 41. Le fonctionnement de la mémoire de cellules 42 et de son gestionnaire 46 est le même que précédemment pour l'écriture et la lecture des cellules aux adresses a fournies par le contrôleur 41.

Chacun des dispositifs de tri 44^{(u)} traite des éléments de données dont les références R^{(u)}(i) désignent des identités de connexions virtuelles IdCx ayant le même index de priorité u. Parmi ces éléments, le dispositif 44^{(u)} sélectionne à son sommet (dans la mémoire 43 dans l'exemple représenté) un élément dont la clé K^{(u)}(1) est minimale. Le contrôleur d'espacement est alors agencé pour commander l'émission de la cellule contenue dans la tête de liste relative à la connexion identifiée dans celui des éléments de données situés dans les sommets des arbres qui présente la plus petite clé de tri. En cas d'égalité entre plusieurs clés de tri minimales K^{(u)} (1), le contrôleur d'espacement 41 retient la connexion qui a l'index de priorité le plus grand parmi les ex aequos.

Cette gestion des index de priorité ne complique pas de façon significative le contrôleur d'espacement 41. En ce qui concerne les opérations effectuées à la réception d'une cellule, l'organigramme de la figure 14 est inchangé, les étapes 210 à 216 étant effectuées à l'égard de l'arbre de tri 44^{(u)} qui correspond à l'index de priorité u reçu par le contrôleur 41 en même temps que l'identité de connexion IdCx.

En ce qui concerne les opérations effectuées dans la seconde phase de chaque période de cellule (figure 15), les étapes 301, 302 de lecture de l'élément situé au sommet de l'arbre et de comparaison de la clé de cet élément à l'heure courante sont effectuées successivement dans l'ordre décroissant des index de priorité jusqu'à ce que, pour un index u, l'étape 302 montre que l'heure courante a été atteinte. Dans ce cas, les étapes 304 à 316 sont exécutées sans changement, l'écriture 312 et la lecture 315 étant effectuées dans le registre 26₁^{(u)}, et l'écriture 316 dans le sommet de l'arbre de tri concerné.

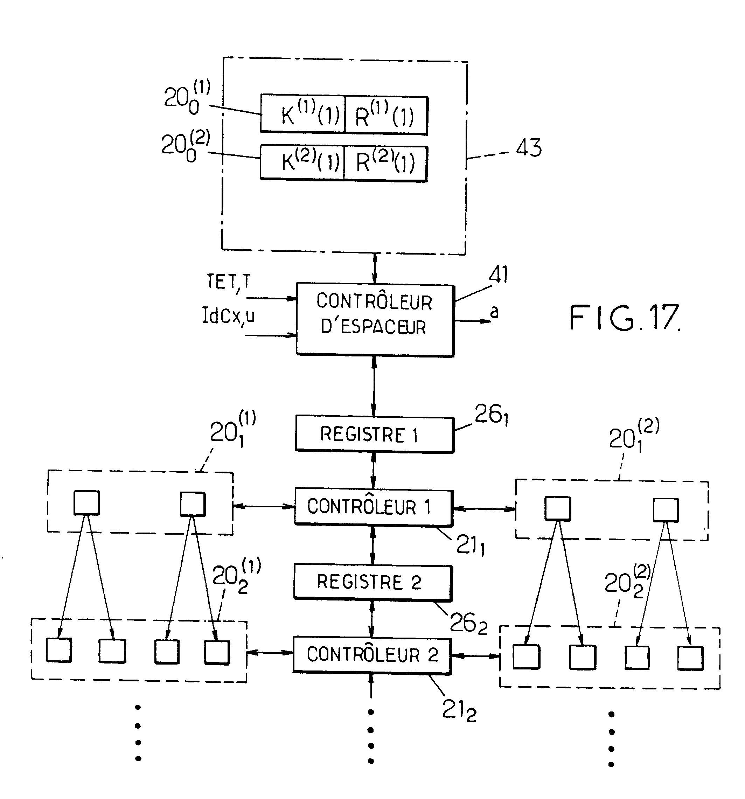

Dans l'exemple de la figure 16, les U dispositifs de tri sont distincts. On note que ces différents dispositifs de tri pourraient partager leurs moyens de contrôle, à savoir leurs contrôleurs 21_{q} et leurs registres pipe-line 26_{q}. La figure 17 illustre une telle implémentation dans le cas particulier où U=2.

Dans le mode de réalisation de la figure 17, les U=2 arbres de tri partagent les registres d'interface 26_{q} et les contrôleurs d'étage 21_{q}. Seuls leurs étages de mémorisation 20_{q}⁽¹⁾,20_{q}⁽²⁾ (q≥0) sont différenciés. Les deux étages 0 sont compris dans la mémoire de pointeurs 43. Pour chaque étage q≥1, les étages correspondants 20_{q}⁽¹⁾,20_{q}⁽²⁾ des deux arbres sont formés par deux zones distinctes de la mémoire gérée par le contrôleur 21_{q}, différenciées sur la base d'un bit d'adresse supplémentaire constitué par exemple par l'index binaire de priorité formant alors le bit de poids le plus fort du champ D_{q} des registres pipe-line.

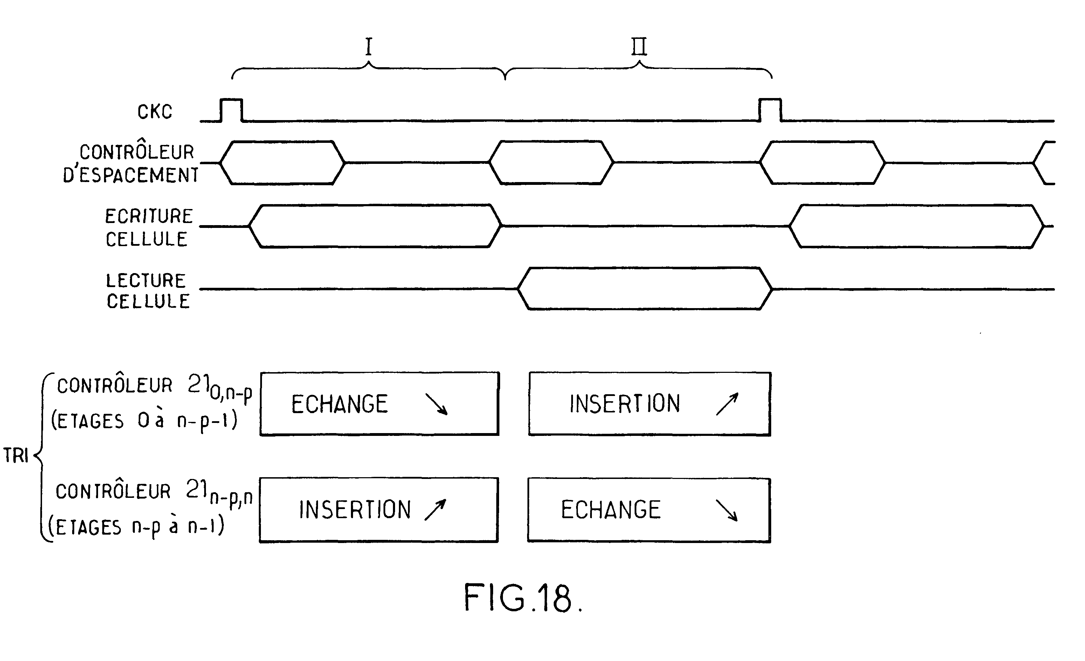

La figure 18 illustre le fonctionnement d'une variante de réalisation de l'espaceur qui peut être utilisée lorsque le débit de la liaison n'est pas trop élevé (par exemple pour une liaison à 155 Mbit/s). Dans cette variante, le dispositif de tri comporte deux contrôleurs, l'un 21_{0,n-p} associé aux étages 0 à n-p-1 de l'arbre binaire, et l'autre 21_{n-p,p} associé aux étages n-p à n-1 de l'arbre binaire. Dans ce dispositif de tri, les commandes d'extraction ou d'échange sont propagées depuis l'étage 0 vers l'étage n-1 comme décrit précédemment, tandis que les commandes d'insertion sont propagées depuis l'étage n-1 en direction de l'étage 0. En conséquence, il n'est nécessaire de prévoir ni compteurs différentiels, ni emplacements dans les registres d'interface pour recevoir une désignation de feuille libre G_{q}.

Chaque période de cellule est divisée en deux phases I et II qui correspondent par exemple à la phase d'écriture éventuelle d'une cellule dans la mémoire de cellules et à la phase de lecture éventuelle d'une cellule dans la mémoire de cellules comme indiqué sur la figure 18. Au début de la première phase I, le contrôleur d'espacement examine s'il y a lieu d'insérer un élément dans l'arbre de tri et d'échanger ou d'extraire un élément de cet arbre. Le cas échéant, le premier contrôleur 21_{0,n-p} commence alors à traiter la commande d'échange depuis l'étage 0 vers l'étage n-p-1, et le second contrôleur 21_{n-p,p} commence à traiter la commande d'insertion en la propageant depuis l'étage n-1 vers l'étage n-p. Pour savoir à partir de quelle feuille propager la commande d'insertion, le contrôleur 21_{n-p,p} tient une liste désignant l'ensemble des feuilles libres de l'étage n-1, l'une d'entre elles étant sélectionnée (par un processus LIFO par exemple) pour servir de point de départ à la commande d'insertion.

Dans la seconde phase II, la commande d'insertion est, si cela est nécessaire, propagée depuis l'étage n-p-1 vers l'étage 0 par le contrôleur 21_{0,n-p}, tandis que le contrôleur 21_{n-p,p} propage, si cela est nécessaire, la commande d'échange depuis l'étage n-p vers l'étage n-1.

Le registre d'interface 26ₙ₋ₚ sert alors de registre pipe-line entre les deux contrôleurs de l'arbre de tri. Pour assurer l'échange éventuel de paramètres entre les deux contrôleurs entre les phases I et II, on peut par exemple dédoubler ce registre pipe-line (un registre pour le sens montant et un registre pour le sens descendant), ou encore prévoir d'échanger successivement les paramètres dans un sens puis dans l'autre.

Le mode de réalisation illustré par la figure 18 peut par exemple être utilisé dans le cas d'une liaison à 155 Mbit/s supportant jusqu'à N=4096 connexions virtuelles. On peut alors dimensionner l'arbre de tri avec n=12 et p=8, le premier contrôleur 21_{0,n-p} supervisant les étages 0 à 3 pouvant être confondu avec le contrôleur d'espacement qui assure la gestion des pointeurs de cellules.

## Revendications

1. Espaceur de cellules ATM transmises selon un ensemble de connexions virtuelles, comprenant :
- une mémoire de cellules (42) dans laquelle des cellules entrantes sont écrites et des cellules sortantes sont lues ;
- des moyens (40,41) pour attribuer une heure théorique d'émission (TET) à chaque cellule stockée dans la mémoire de cellules, comprenant des moyens (40) de calcul récursif d'une heure théorique d'émission (TET) pour chaque cellule relevant d'une connexion virtuelle sur la base de paramètres incluant au moins l'heure d'arrivée (ta) de ladite cellule et un intervalle d'espacement (T) alloué à ladite connexion
- des moyens de contrôle d'espacement (41,46) pour gérer la mémoire de cellules (42), à l'aide d'une mémoire de pointeurs associée (43), de façon que la mémoire de cellules comporte, pour chaque connexion virtuelle pour laquelle elle contient des cellules, une liste d'emplacements où ces cellules sont rangées en mode premier entré-premier sorti entre une tête de liste et une fin de liste ; et
- des moyens de tri (41,44) pour ordonnancer des éléments de données (K(i),R(i)) comportant chacun une identité de connexion virtuelle et une clé de tri consistant en l'heure théorique d'émission de la cellule contenue dans la tête de liste relative à ladite connexion virtuelle, et pour sélectionner au moins un élément de données ayant une clé de tri minimale, les moyens de contrôle d'espacement étant agencés pour commander l'émission d'une cellule contenue dans la tête de liste relative à une connexion virtuelle identifiée dans un élément de données sélectionné par les moyens de tri,
dans lequel, à l'arrivée d'une cellule relevant d'une connexion virtuelle pour laquelle la mémoire de cellules (42) ne contient aucune cellule, les moyens de tri (41,44) reçoivent un nouvel élément de données comportant l'identité de ladite connexion virtuelle et, comme clé de tri, l'heure théorique d'émission de ladite cellule fournie par les moyens (40) de calcul récursif,
dans lequel, à l'émission d'une première cellule relevant d'une connexion virtuelle pour laquelle la mémoire de cellules comporte une liste d'emplacements contenant en outre au moins une seconde cellule, les moyens de tri reçoivent un nouvel élément de données comportant l'identité de ladite connexion virtuelle et, comme clé de tri, une heure théorique d'émission de ladite seconde cellule égale à l'heure théorique d'émission de ladite première cellule augmentée de l'intervalle d'espacement alloué à ladite connexion,
l'espaceur étant **caractérisé en ce que** les moyens de tri comprennent au moins un dispositif de tri (44) comprenant
- des moyens de mémorisation (20₀-20ₙ₋₁) organisés selon un arbre binaire de 2ⁿ-1 noeuds numérotés de 1 à 2ⁿ-1 aptes à contenir chacun un élément de données et répartis en n étages successifs numérotés de 0 à n-1, l'étage q comprenant les noeuds 2^{q} à 2^{q+1}-1 ; et
- des moyens de contrôle (20₀-20ₙ₋₁) de l'arbre binaire pour distribuer les éléments à trier dans l'arbre de façon à vérifier une condition d'ordonnancement selon laquelle, pour chaque entier i compris entre 1 et 2ⁿ⁻¹-1 tel que le noeud i contienne un élément à trier, chacun des noeuds 2i et 2i+1 soit ne contient pas d'élément à trier, soit contient un élément dont la clé de tri est supérieure ou égale à la clé de tri de l'élément contenu dans le noeud i,
et dans lequel les moyens de contrôle de l'arbre binaire répondent à des commandes de modification du contenu de l'arbre binaire qui incluent des commandes d'insertion d'un nouvel élément à trier.

2. Espaceur selon la revendication 1, dans lequel les emplacements de la mémoire de cellules (42) qui ne sont pas occupés par des cellules à émettre sont gérés par les moyens de contrôle d'espacement (41,46) sous forme d'une liste d'emplacements libres, entre une tête de liste d'emplacements libres et une fin de liste d'emplacements libres, au moyen de pointeurs (Ptr_libre, Ptr_suite) contenus dans la mémoire de pointeurs (43).

3. Espaceur selon la revendication 2, dans lequel chaque emplacement (Ch_cell(i)) de la mémoire de cellules est associé à un pointeur de suite (Ptr_suite(i)) qui, si ledit emplacement n'est pas une fin de liste, désigne un autre emplacement de la mémoire de cellules qui lui fait suite dans sa liste.

4. Espaceur selon la revendication 3, dans lequel la mémoire de pointeurs (43) contient, pour chaque connexion virtuelle, un pointeur de tête de liste (Ptr_tête) et un pointeur de fin de liste (Ptr_fin) qui, si au moins une cellule relevant de ladite connexion est contenue dans la mémoire de cellules (42), désignent respectivement la tête et la fin de la liste d'emplacements correspondant à ladite connexion.

5. Espaceur selon l'une quelconque des revendications 1 à 4, dans lequel des index de priorité (u) sont affectés aux connexions virtuelles, dans lequel les moyens de tri comportent plusieurs dispositifs de tri (44^{(u)}) traitant chacun des éléments de données comportant des identités de connexions virtuelles de même index de priorité et sélectionnant chacun, parmi les éléments de données qu'il traite, un élément ayant une clé de tri minimale (K^{(u)}(1)), et dans lequel les moyens de contrôle d'espacement sont agencés pour commander l'émission d'une cellule contenue dans la tête de liste relative à la connexion identifiée soit dans celui des éléments de données sélectionné qui présente la plus petite clé de tri soit, si plusieurs dispositifs de tri sélectionnent chacun un élément de données dont la clé de tri est la plus petite, dans celui des éléments de données sélectionnés par ces dispositifs de tri pour lequel l'index de priorité est maximal.

6. Espaceur selon la revendication 5, dans lequel les différents dispositifs de tri comprennent chacun des moyens de mémorisation respectifs (20_{q}⁽¹⁾, 20_{q}⁽²⁾) et partagent leurs moyens de contrôle (21_{q}, 26_{q}).

7. Espaceur selon la revendication 1, dans lequel les moyens de contrôle de l'arbre binaire comprennent m contrôleurs successifs (21_{q}) associés chacun à un étage (20_{q}) ou à plusieurs étages consécutifs de l'arbre binaire, m étant un entier compris entre 2 et n, et n-1 registres d'interface (26_{q}) entre étages successifs, parmi lesquels chacun des m-1 registres d'interface entre paires d'étage associés à des contrôleurs différents constitue un registre pipe-line, et dans lequel chaque commande de modification du contenu de l'arbre binaire est propagée de l'étage 0 vers l'étage n-1 au moyen des registres d'interface, le ou les registres pipe-line permettant un travail en parallèle des contrôleurs.

8. Espaceur selon la revendication 7, dans lequel, pour chaque entier q compris entre 1 et n-1, le registre d'interface (26_{q}) entre l'étage q-1 et l'étage q comporte un premier emplacement pour recevoir une commande (A_{q}) propagée d'un noeud de l'étage q-1 vers un noeud de l'étage q, un second emplacement pour recevoir une identification (D_{q}) dudit noeud de l'étage q-1 auquel le contrôleur associé (21_{q-1}) accède lors du traitement de ladite commande, et un troisième emplacement pour recevoir un élément de données (B_{q},C_{q}) transmis depuis ou vers ledit noeud de l'étage q-1.

9. Espaceur selon la revendication 8, dans lequel, pour chaque entier q compris entre 1 et n-1, le registre d'interface (26_{q}) entre l'étage q-1 et l'étage q comporte un quatrième emplacement pour recevoir un bit (E_{q}) désignant, avec l'identification (D_{q}) contenue dans le second emplacement, le noeud de l'étage q vers lequel est propagée ladite commande et auquel le contrôleur associé (21_{q}) accède lors du traitement de la commande contenue dans le premier emplacement si celle-ci se rapporte à l'insertion d'un nouvel élément dans l'arbre.

10. Espaceur selon la revendication 9, dans lequel, pour chaque entier q compris entre 1 et n-1, les second et quatrième emplacements du registre (26_{q}) d'interface entre l'étage q-1 et l'étage q font partie d'un champ de désignation de feuille de n-1 bits contenant, lors de la propagation d'une commande d'insertion d'un nouvel élément, les n-1 bits de poids les plus faibles du numéro d'une feuille libre, c'est-à-dire d'un noeud libre de l'étage n-1, en direction de laquelle est propagée ladite commande, le noeud de l'étage q vers lequel est propagée ladite commande étant désigné par les q bits de poids les plus forts du contenu du champ de désignation de feuille.

11. Espaceur selon la revendication 10, dans lequel le contrôleur (21ₙ₋₁) associé à l'étage n-1 de l'arbre gère une première liste de feuilles libres contenant un nombre déterminé n' de feuilles libres incluant chaque feuille en direction de laquelle une commande d'insertion d'un nouvel élément est en cours de propagation dans l'arbre, et une seconde liste de feuilles libres contenant les feuilles libres non contenues dans la première liste,
dans lequel, lors de l'inscription d'une commande d'insertion d'un nouvel élément à trier dans le premier emplacement du registre d'interface entre les étages 0 et 1, les n-1 bits de poids les plus faibles du numéro d'une feuille libre de la première liste, différente de chaque feuille en direction de laquelle une autre commande d'insertion est en cours de propagation dans l'arbre, sont inscrits dans le champ de désignation de feuille du registre d'interface entre les étages 0 et 1,
dans lequel, lors de l'extraction d'un élément depuis une feuille de l'arbre, cette feuille est incluse dans la seconde liste de feuilles libres,
et dans lequel, lorsqu'une commande d'insertion d'un nouvel élément parvient à l'étage n-1 dans le registre d'interface (26ₙ₋₁) entre les étages n-2 et n-1, le contrôleur associé (21ₙ₋₁) enlève de la première liste de feuilles libres la feuille (Gₙ₋₁) désignée par les n-1 bits du champ de désignation de feuille dudit registre d'interface, et la remplace par une feuille de la seconde liste.

12. Espaceur selon la revendication 11, dans lequel n'<n.

13. Espaceur selon la revendication 11 ou 12, dans lequel la première liste de feuilles libres est stockée dans un registre à décalage (30) rebouclé sur lui-même, ayant n' emplacements recevant chacun les n-1 bits de poids les plus faibles d'un numéro de feuille.

14. Espaceur selon la revendication 11, 12 ou 13, dans lequel la seconde liste de feuilles libres est stockée en mode dernier entré-premier sorti sous la forme d'une chaîne de pointeurs, chaque pointeur représentant le numéro d'une feuille, le premier pointeur (P) de la chaîne étant stocké à un emplacement spécifique, et le i-ième pointeur de la chaîne (i≥2) étant stocké dans la feuille dont le numéro est représenté par le (i-1)-ième pointeur de la chaîne.

15. Espaceur selon la revendication 11 ou 12, dans lequel les première et seconde listes sont stockées sous la forme d'une file d'attente logique de type premier entré-premier sorti ayant au moins n' emplacements, la première liste étant constituée par les n' derniers emplacements de la file d'attente logique et la seconde liste par les emplacements précédents de la file d'attente logique.

16. Espaceur selon la revendication 10 ou 11, dans lequel, p étant le nombre, supérieur ou égal à 1 et inférieur à n-1, d'étages de l'arbre binaire associés au m-ième contrôleur, les moyens de mémorisation comprennent au moins 2^{n-p-1}-1 emplacements (25) pour contenir des compteurs différentiels (Δ(i)) respectivement associés aux couples de noeuds 2i et 2i+1 de l'arbre pour i allant de 1 à 2^{n-p-1}-1, chaque compteur différentiel associé à un couple de noeuds ayant une valeur indicative de la différence entre les nombres d'éléments de données respectivement contenus dans les descendants des deux noeuds dudit couple, les descendants d'un noeud i d'un étage q étant définis comme les 2^{n-q}-1 noeuds de l'arbre binaire dont les numéros sont de la forme i2^{j}+j' où j et j' sont des entiers tels que 0≤j<n-q et 0≤j'<2^{j},
et dans lequel, lorsque le registre d'interface (26_{q}) entre l'étage q-1 et l'étage q (1≤q<n-p) reçoit une commande d'insertion (A_{q}) d'un nouvel élément dans son premier emplacement et l'identification (D_{q}) d'un noeud de l'étage q-1 dans son second emplacement, ladite commande d'insertion est propagée vers le noeud 2i ou 2i+1 de l'étage q selon la valeur du compteur différentiel (Δ(i)) associé au couple de noeuds 2i et 2i+1.

17. Espaceur selon la revendication 16, dans lequel les emplacements (25) des moyens de mémorisation contenant les compteurs différentiels (Δ(i)) associés aux couples de noeuds d'un étage sont accessibles par le même contrôleur que les noeuds dudit étage.

18. Espaceur selon l'une quelconque des revendications 10 à 17, dans lequel les moyens de mémorisation comprennent 2ⁿ⁻¹-1 emplacements (23) pour contenir des bits d'orientation (F(i)) respectivement associés aux couples de noeuds 2i et 2i+1 de l'arbre pour i allant de 1 à 2ⁿ⁻¹-1, chaque bit d'orientation associé à un couple de noeuds pointant l'un des noeuds dudit couple contenant un élément dont la clé de tri est inférieure ou égale à la clé de tri de l'élément contenu dans l'autre noeud dudit couple,
et dans lequel, lorsque le registre d'interface (26_{q}) entre l'étage q-1 et l'étage q (1≤q≤n-1) reçoit une commande (A_{q}) d'extraction ou d'échange d'un élément dans son premier emplacement et l'identification (D_{q}) d'un noeud i de l'étage q-1 dans son second emplacement, ladite commande d'extraction ou d'échange est propagée vers le noeud 2i ou 2i+1 de l'étage q selon la valeur du bit d'orientation (F(i)) associé au couple de noeuds 2i et 2i+1.

19. Espaceur selon la revendication 18, dans lequel les emplacements (23) des moyens de mémorisation contenant les bits d'orientation (F(i)) associés aux couples de noeuds d'un étage sont accessibles par le même contrôleur que les noeuds dudit étage.

20. Espaceur selon la revendication 1, dans lequel les moyens de contrôle de l'arbre binaire comprennent deux contrôleurs successifs (21_{0,n-p}, 21_{n-p,p}) associés chacun à un étage ou à plusieurs étages consécutifs de l'arbre binaire, et n-1 registres d'interface entre étages successifs, parmi lesquels le registre d'interface (26ₙ₋ₚ) entre les deux étages consécutifs respectivement associés aux deux contrôleurs constitue un registre pipe-line permettant un travail en parallèle des deux contrôleurs, dans lequel les moyens de contrôle d'espacement et les moyens de contrôle de l'arbre binaire sont agencés pour diviser chaque période de cellule en une première phase (I) et une seconde phase (II), de façon qu'une commande d'insertion d'un nouvel élément de données à trier soit traitée par le second contrôleur dans la première phase et par le premier contrôleur dans la seconde phase, et qu'une commande d'extraction ou d'échange d'un élément de données dans l'arbre soit traitée par le premier contrôleur dans la première phase et par le second contrôleur dans la seconde phase, la commande d'insertion étant propagée de l'étage n-1 vers l'étage 0 au moyen des registres d'interface, et la commande d'extraction ou d'échange étant propagée de l'étage 0 vers l'étage n-1 au moyen des registres d'interface.

21. Espaceur selon l'une quelconque des revendications 7 à 20, dans lequel le premier contrôleur, qui est associé à l'étage 0 au moins, fait partie des moyens de contrôle d'espacement.

## Patentansprüche

1. Abstandshalter von ATM-Zellen, die entsprechend einer Menge virtueller Verbindungen übertragen werden, umfassend:
- einen Zellenspeicher (42), bei dem die eingehenden Zellen eingeschrieben und die ausgehenden Zellen gelesen werden;
- Mittel (40, 41) zum Zuteilen einer theoretischen Aussendungsuhrzeit (TET) an jede im Zellenspeicher gespeicherte Zelle, die Mittel (40) zur rekursiven Berechnung einer theoretischen Aussendungsuhrzeit (TET) für jede für eine virtuelle Verbindung erhebliche Zelle auf der Basis von Parametern umfassen, die wenigstens die Ankunftsuhrzeit (ta) der genannten Zelle und ein dieser Verbindung eingeräumtes Abstandsintervall (T) einschließen;
- Abstandssteuermittel (41, 46), um den Zellenspeicher (42) mittels eines zugeordneten Zeigerspeichers (43) zu leiten, so dass der Zellenspeicher für jede virtuelle Verbindung, für die er Zellen enthält, eine Liste von Stellen umfasst, in der diese Zellen zwischen einem Listenkopf und einem Listenende im First-in-First-out-Modus angeordnet werden; und
- Sortiermittel (41, 44), um Datenelemente (K(i), R(i)) anzuweisen, die jeweils eine virtuelle Verbindungsidentität und einen Sortierschlüssel enthalten, der aus der theoretischen Aussendungsuhrzeit der in dem die genannte virtuelle Verbindung betreffenden Listenkopf enthaltenen Zelle besteht, und um wenigstens ein Datenelement mit einem minimalen Sortierschlüssel auszuwählen, wobei die Abstandssteuermittel zum Steuern der Aussendung einer Zelle eingerichtet sind, die in dem Listenkopf enthalten ist, der eine virtuelle Verbindung betrifft, die in einem durch die Sortiermittel ausgewählten Datenelement identifiziert wird,
bei dem bei der Ankunft einer für eine virtuelle Verbindung erheblichen Zelle, für welche der Zellenspeicher (42) keine Zelle enthält, die Sortiermittel (41, 44) ein neues Datenelement empfangen, das die Identität der genannten virtuellen Verbindung und als Sortierschlüssel die theoretische Aussendungsuhrzeit der genannten, von den Mitteln (40) zur rekursiven Berechnung gelieferten Zelle enthält,
bei dem bei der Aussendung einer ersten für eine virtuelle Verbindung erheblichen Zelle, für die der Zellenspeicher eine außerdem wenigstens eine zweite Zelle enthaltende Stellenliste umfasst, die Sortiermittel ein neues Datenelement empfangen, das die Identität der genannten virtuellen Verbindung und als Sortierschlüssel eine theoretische Aussendungsuhrzeit der genannten zweiten Zelle enthält, die gleich der theoretischen Aussendungsuhrzeit der genannten ersten Zelle ist, vermehrt um das dieser Verbindung eingeräumte Abstandsintervall,
wobei der Abstandshalter **dadurch gekennzeichnet ist, dass** die Sortiermittel wenigstens eine Sortiervorrichtung (44) enthalten, die umfasst:
- Speichermittel (20₀-20ₙ₋₁), die entsprechend einem binären Baum mit von 1 bis 2ⁿ-1 nummerierten 2ⁿ-1 Knoten organisiert sind, die jeweils zur Aufnahme eines Datenelementes geeignet sind und in n aufeinanderfolgende, von 0 bis n-1 nummerierte Stufen aufgeteilt sind, wobei die Stufe q die Knoten 2^{q} bis 2^{q+1}-1 umfasst; und
- Mittel zur Steuerung (20₀-20ₙ₋₁) des binären Baumes, um die im Baum zu sortierenden Elemente derart zu verteilen, dass eine Anweisungsbedingung verifiziert wird, gemäß der für jedes ganzzahlige i zwischen 1 und 2ⁿ⁻¹-1 wie z.B. der Knoten i ein zu sortierendes Element enthält, wobei jeder der Knoten 2i und 2i+1 entweder kein zu sortierendes Element enthält oder ein Element enthält, dessen Sortierschlüssel größer als der oder gleich dem Sortierschlüssel des im Knoten i enthaltenen Elementes ist,
und bei dem die Mittel zur Steuerung des binären Baumes Befehlen zur Änderung des Inhaltes des binären Baumes Folge leisten, die Befehle zur Einfügung eines neuen, zu sortierenden Elements einschließen.

2. Abstandshalter nach Anspruch 1, bei dem die Stellen des Zellenspeichers (42), die nicht durch die auszusendenden Zellen besetzt sind, durch die Mittel zur Abstandssteuerung (41, 46) in Form einer Liste von freien Stellen zwischen einem Kopf der Liste freier Stellen und einem Ende der Liste freier Stellen mittels Zeigern (Ptr_libre, Ptr_suite) geleitet werden, die im Zeigerspeicher (43) enthalten sind.

3. Abstandshalter nach Anspruch 2, bei dem jede Stelle (Ch_cell(i)) des Zellenspeichers einem Folgezeiger (Ptr_suite(i)) zugeordnet ist, der, wenn die Stelle kein Listenende ist, eine andere Stelle des Zellenspeichers bezeichnet, die ihr in ihrer Liste folgt.

4. Abstandshalter nach Anspruch 3, bei dem der Zeigerspeicher (43) für jede virtuelle Verbindung einen Listenkopfzeiger (Ptr_tête) und einen Listenendezeiger (Ptr_fin) enthält, die, wenn wenigstens eine für die Verbindung relevante Zelle im Zellenspeicher (42) enthalten ist, den Kopf bzw. das Ende der dieser Verbindung entsprechenden Stellenliste bezeichnen.

5. Abstandshalter nach einem der Ansprüche 1 bis 4, bei dem Prioritätsindexe (u) den virtuellen Verbindungen zugeteilt sind, bei dem die Sortiermittel mehrere 5ortiervorrichtungen (44^{(u)}) enthalten, die jeweils Datenelemente behandeln, welche Identitäten der virtuellen Verbindungen von gleichem Prioritätsindex enthalten, und die jeweils aus den davon behandelten Datenelementen ein Element mit einem minimalen Sortierschlüssel (K^{(u)} (1)) auswählen, und bei dem die Abstandssteuermittel eingerichtet sind, um die Aussendung einer Zelle, die im Kopf der die identifizierte Verbindung betreffende Liste enthalten ist, entweder in dasjenige ausgewählte der Datenelemente zu befehlen, das den kleinsten Sortierschlüssel aufweist, oder, wenn mehrere Sortiervorrichtungen jeweils ein Datenelement auswählen, dessen Sortierschlüssel der kleinste ist, in dasjenige der durch diese Sortiervorrichtungen ausgewählten Datenelemente, für das der Prioritätsindex maximal ist.

6. Abstandshalter nach Anspruch 5, bei dem die verschiedenen Sortiervorrichtungen jeweils betreffende Speichermittel (20_{q}⁽¹⁾, 20_{q}⁽²⁾) aufweisen und ihre Steuermittel (21_{q}, 26_{q}) teilen.

7. Abstandshalter nach Anspruch 1, bei dem die Mittel zum Steuern des binären Baumes m aufeinanderfolgende Steuereinheiten (21_{q}) umfassen, die jeweils einer Stufe (20_{q}) oder mehreren aufeinanderfolgenden Stufen des binären Baumes, wobei m eine ganze Zahl zwischen 2 und n ist, und n-1 Schnittstellenregistern (26_{q}) zwischen aufeinanderfolgenden Stufen zugeordnet sind, von denen jedes der m-1 Schnittstellenregister zwischen den verschiedenen Steuereinheiten zugeordneten Stufenpaaren ein Pipeline-Register bildet, und bei dem jeder Befehl zur Änderung des Inhaltes des binären Baumes von der Stufe 0 zur Stufe n-1 mittels der Schnittstellenregister verbreitet wird, wobei das oder die Pipeline-Register einen Parallelbetrieb der Steuereinheiten ermöglicht/ermöglichen.

8. Abstandshalter nach Anspruch 7, bei dem für jedes ganzzahlige q zwischen 1 und n-1 das Schnittstellenregister (26_{q}) zwischen der Stufe q-1 und der Stufe q eine erste Stelle zum Empfangen eines von einem Knoten der Stufe q-1 zu einem Knoten der Stufe q verbreiteten Befehls (Aq), eine zweite Stelle zum Empfangen einer Identifizierung (D_{q}) des genannten Knotens der Stufe q-1, auf welche die zugeordnete Steuereinheit (21_{q-1}) bei der Behandlung des genannten Befehles zugreift, und eine dritte Stelle zum Empfangen eines aus oder zu diesem Knoten der Stufe q-1 übertragenen Datenelementes (B_{q}, C_{q}) enthält.

9. Abstandshalter nach Anspruch 8, bei dem für jedes ganzzahlige q zwischen 1 und n-1 das Schnittstellenregister (26_{q}) zwischen der Stufe q-1 und der Stufe q eine vierte Stelle zum Empfangen eines Bits (E_{q}) enthält, das mit der an der zweiten Stelle enthaltenen Identifizierung (D_{q}) den Knoten der Stufe q bezeichnet, zu dem der genannte Befehl verbreitet wird und auf den die zugeordnete Steuereinheit (21_{q}) bei der Behandlung des an der ersten Stelle enthaltenen Befehls (A_{q}) zugreift, wenn sich dieser auf die Einfügung eines neuen Elementes in den Baum bezieht.

10. Abstandshalter nach Anspruch 9, bei dem für jedes ganzzahlige q zwischen 1 und n-1 die zweite und dritte Stelle des Schnittstellenregisters (26_{q}) zwischen der Stufe q-1 und der Stufe q zu einem Blattbezeichnungsfeld von n-1 Bits gehören, das bei der Verbreitung eines Befehls zur Einfügung eines neuen Elementes die n-1 niedrigstgewichtigen Bits der Nummer eines freien Blattes enthält, d.h. eines freien Knotens der Stufe n-1, in dessen Richtung der genannte Befehl verbreitet wird, wobei der Knoten der Stufe q, zu dem hin der genannte Befehl verbreitet wird, durch die q höchstgewichtigen Bits des Inhaltes des Blattbezeichnungsfeldes bezeichnet wird.

11. Abstandshalter nach Anspruch 10, bei dem die der Stufe n-1 des Baumes zugeordnete Steuereinheit (21ₙ₋₁) eine erste Liste von freien Blättern, die eine festgelegte Anzahl n' von freien Blättern enthält, die jedes Blatt einschließt, in dessen Richtung im Baum ein Befehl zur Einfügung eines neuen Elementes in Ausbreitung befindlich ist, und eine zweite Liste von freien Blättern leitet, die freie Blätter enthält, die nicht in der ersten Liste enthalten sind,
bei dem bei der Einschreibung eines Befehls zur Einfügung eines neuen zu sortierenden Elementes an die erste Stelle des Schnittstellenregisters zwischen die Stufen 0 und 1 die n-1 niedrigstgewichtigen Bits der Nummer eines freien Blattes der ersten Liste, das von jedem Blatt verschieden ist, in dessen Richtung ein anderer Einfügungsbefehl im Baum in Ausbreitung befindlich ist, in das Blattbezeichnungsfeld des Schnittstellenregisters zwischen den Stufen 0 und 1 eingeschrieben werden,
bei dem beim Herausziehen eines Elementes aus einem Blatt des Baumes dieses Blatt in die zweite Liste freier Blätter aufgenommen wird,
und bei dem, wenn ein Befehl zur Einfügung eines neuen Elementes zur Stufe n-1 in das Schnittstellenregister (26ₙ₋₁) zwischen den Stufen n-2 und n-1 gelangt, die zugeordnete Steuereinheit (21ₙ₋₁) aus der ersten Liste von freien Blättern das durch die n-1 Bits des Blattbezeichnungsfeldes des genannten Schnittstellenregisters bezeichnete Blatt (Gₙ₋₁) entnimmt und es durch ein Blatt der zweiten Liste ersetzt.

12. Abstandshalter nach Anspruch 11, bei dem n'<n.

13. Abstandshalter nach Anspruch 11 oder 12, bei dem die erste Liste von freien Blättern in ein in sich rückgekoppeltes Schieberegister (30) gespeichert wird, das n' Stellen hat, die jeweils die n-1 niedrigstgewichtigen Bits einer Blattnummer empfangen.

14. Abstandshalter nach Anspruch 11, 12 oder 13, bei dem die zweite Liste von freien Blättern im Last-in-First-out-Modus in Form einer Zeigerkette gespeichert wird, wobei jeder Zeiger die Nummer eines Blattes darstellt, wobei der erste Zeiger (P) der Kette an einer spezifischen Stelle gespeichert wird und der i-te Zeiger der Kette (i≥2) im Blatt gespeichert wird, dessen Nummer durch den (i-1)-ten Zeiger der Kette dargestellt wird.

15. Abstandshalter nach Anspruch 11 oder 12, bei dem die ersten und zweiten Listen in Form einer logischen Warteschlange der First-in-First-out-Art mit wenigstens n' Stellen gespeichert werden, wobei die erste Liste durch die n' letzten Stellen der logischen Warteschlange und die zweite Liste durch die vorhergehenden Stellen der logischen Warteschlange gebildet werden.

16. Abstandshalter nach Anspruch 10 oder 11, bei dem, wenn p die mehr als oder gleich 1 und weniger als n-1 betragende Anzahl von der m-ten Steuereinheit zugeordneten Stufen des binären Baumes ist, die Speichermittel wenigstens 2^{n-p-1}-1 Stellen (25) zur Aufnahme von differentiellen Zählern (Δ(i)) umfassen, die jeweils je einem der Paar Knoten 2i bzw. 2i+1 des Baumes mit einem von 1 bis 2^{n-p-1}-1 gehenden i zugeordnet sind, wobei jeder je einem Paar Knoten zugeordnete differentielle Zähler einen Wert hat, der die Differenz zwischen den Anzahlen von Datenelementen angibt, die in den Abkömmlingen des einen bzw. des anderen Knotens der beiden Knoten dieses Paares enthalten sind, wobei die Abkömmlinge eines Knotens i einer Stufe q als die 2^{n-q}-1 Knoten des binären Baumes definiert sind, deren Nummern von der Form i2^{j}+j' sind, worin j und j' ganze Zahlen sind, die wie 0≤j<n-q und 0≤j'<2^{j} beschaffen sind,
und bei dem, wenn das Schnittstellenregister (26_{q}) zwischen der Stufe q-1 und der Stufe q (1≤q<n-p) einen Befehl zur Einfügung (A_{q}) eines neuen Elementes an seine erste Stelle und die Identifizierung (D_{q}) eines Knotens i der Stufe q-1 an seine zweite Stelle empfängt, der genannte Einfügungsbefehl zum Knoten 2i oder 2i+1 der Stufe q entsprechend dem Wert des differentiellen Zählers (Δ(i)) verbreitet wird, welcher dem Paar Knoten 2i und 2i+1 zugeordnet ist.

17. Abstandshalter nach Anspruch 16, bei dem die Stellen (25) der Speichermittel, welche die den Paar Knoten einer Stufe zugeordneten differentiellen Zähler (Δ(i)) enthalten, durch die gleiche Steuereinheit zugänglich sind wie die Knoten der genannten Stufe.

18. Abstandshalter nach einem der Ansprüche 11 bis 17, bei dem die Speichermittel 2ⁿ⁻¹-1 Stellen (23) zur Aufnahme von Orientierungsbits (F(i)) umfassen, die jeweils je einem der Paar Knoten 2i und 2i+1 des Baumes für ein von 1 bis 2ⁿ⁻¹-1 gehendes i zugeordnet sind, wobei jedes einem Paar Knoten zugeordnete Orientierungsbit den einen der Knoten des genannten Paares anzeigt, der ein Element enthält, dessen Sortierschlüssel kleiner oder gleich dem Sortierschlüssel des im anderen Knoten des genannten Paares enthaltenen Elementes ist,
und bei dem, wenn das Schnittstellenregister (26_{q}) zwischen der Stufe q-1 und der Stufe q (1≤q≤n-1) einen Befehl (A_{q}) zum Herausziehen oder zum Austauschen eines Elementes an seiner ersten Stelle und die Identifizierung (D_{q}) eines Knotens i der Stufe q-1 an seiner zweiten Stelle empfängt, der genannte Befehl zum Herausziehen oder zum Austauschen zum Knoten 2i oder 2i+1 der Stufe q entsprechend dem Wert des dem Paar Knoten 2i und 2i+1 zugeordneten Orientierungsbits (F(i)) verbreitet wird.

19. Abstandshalter nach Anspruch 18, bei dem die Stellen (23) der Speichermittel, welche die den Paar Knoten einer Stufe zugeordneten Orientierungsbits (F(i)) enthalten, durch die gleiche Steuereinheit zugänglich sind wie die Knoten dieser Stufe.

20. Abstandshalter nach Anspruch 1, bei dem die Mittel zur Steuerung des binären Baumes zwei aufeinanderfolgende Steuereinheiten (21_{0,n-p}, 21_{n-p,p}), die jeweils einer Stufe oder mehreren aufeinanderfolgenden Stufen des binären Baumes zugeordnet sind, und n-1 Schnittstellenregister zwischen aufeinanderfolgenden Stufen umfassen, von denen das Schnittstellenregister (26ₙ₋ₚ) zwischen den beiden aufeinanderfolgenden Stufen, die der einen bzw. der anderen Steuereinheit zugeordnet sind, ein Pipeline-Register bildet, das einen Parallelbetrieb der beiden Steuereinheiten erlaubt, bei dem die Abstandssteuermittel und die Mittel zur Steuerung des binären Baumes eingerichtet sind, um jede Zellenperiode in eine erste Phase (I) und eine zweite Phase (II) zu teilen, so dass ein Einfügungsbefehl eines neuen, zu sortierenden Datenelements durch die zweite Steuereinheit in der ersten Phase und durch die erste Steuereinheit in der zweiten Phase behandelt wird und dass ein Befehl zum Herausziehen oder zum Austausch eines Datenelements im Baum durch die erste Steuereinheit in der ersten Phase und durch die zweite Steuereinheit in der zweiten Phase behandelt wird, wobei der Einfügungsbefehl von der Stufe n-1 zur Stufe 0 hin mittels der Schnittstellenregister verbreitet wird und der Herausziehungs- oder Austauschbefehl von der Stufe 0 zur Stufe n-1 hin mittels der Schnittstellenregister verbreitet wird.

21. Abstandshalter nach einem der Ansprüche 7 bis 20, bei dem die erste Steuereinheit, die mindestens der Stufe 0 zugeordnet ist, Teil der Abstandssteuermittel ist.

## Claims

1. Spacer of ATM cells transmitted according to a plurality of virtual connections, comprising:
- a cell memory (42) to which incoming cells are written and from which outgoing cells are read;
- means (40, 41) for allocating a theoretical emission time (TET) to each cell stored in the cell memory, comprising means (40) of recursive calculation of a theoretical emission time (TET) for each cell pertaining to a virtual connection on the basis of parameters including at least the time of arrival (ta) of said cell and a spacing interval (T) allotted to said connection;
- spacing control means (41, 46) for managing the cell memory (42), with the aid of an associated pointer memory (43), in such a way that the cell memory comprises, for each virtual connection for which it contains cells, a list of locations where said cells are stored in first-in first-out mode between a start of list and an end of list; and
- sorting means (41, 44) for ordering data elements (K(i), R(i)) each comprising a virtual connection identity and a sort key consisting of the theoretical time of emission of the cell contained in the start of list relating to said virtual connection, and for selecting at least one data element having a minimum sort key, the spacing control means being devised so as to command the emission of a cell contained in the start of list relating to a virtual connection identified in a data element selected by the sorting means,
wherein, upon the arrival of a cell pertaining to a virtual connection for which the cell memory (42) contains no cell, the sorting means (41, 44) receive a new data element comprising the identity of said virtual connection and, as sort key, the theoretical time of emission of said cell supplied by the means (40) of recursive calculation,
wherein, upon the emission of a first cell pertaining to a virtual connection for which the cell memory comprises a list of locations further containing at least one second cell, the sorting means receive a new data element comprising the identity of said virtual connection and, as sort key, a theoretical time of emission of said second cell equal to the theoretical time of emission of said first cell plus the spacing interval allotted to said connection,
the spacer being **characterized in that** the sorting means comprise at least one sorting device (44) comprising:
- storage means (20₀-20ₙ₋₁) organized according to a binary tree with 2ⁿ-1 nodes numbered from 1 to 2ⁿ-1 which are each able to contain a data element and are distributed in n successive stages numbered from 0 to n-1, stage q comprising nodes 2^{q} to 2^{q+1}-1; and
- means of control (21₀-21ₙ₋₁) of the binary tree for dispersing the elements to be sorted within the tree in such a way as to satisfy an ordering condition according to which, for each integer i lying between 1 and 2ⁿ⁻¹-1 such that node i contains an element to be sorted, each of the nodes 2i and 2i+1 either contains no element to be sorted, or contains an element whose sort key is greater than or equal to the sort key of the element contained in node i, and wherein the means of control of the binary tree respond to commands to modify the contents of the binary tree which include commands for inserting a new element to be sorted.

2. Spacer according to Claim 1, wherein the locations of the cell memory (42) which are not occupied by cells to be emitted are managed by the spacing control means (41, 46) in the form of a list of free locations, between a start of list of free locations and an end of list of free locations, by means of pointers (Ptr_free, Ptr_cont) contained in the pointer memory (43).

3. Spacer according to Claim 2, wherein each location (Ch_cell(i)) of the cell memory is associated with a continuation pointer (Ptr_cont(i)) which, if said location is not an end of list, designates another location of the cell memory which continues on therefrom in its list.

4. Spacer according to Claim 3, wherein the pointer memory (43) contains, for each virtual connection, a start of list pointer (Ptr_start) and an end of list pointer (Ptr_end) which, if at least one cell pertaining to said connection is contained in the cell memory (42), respectively designate the start and the end of the list of locations corresponding to said connection.

5. Spacer according to any one of Claims 1 to 4,
wherein priority indices (u) are assigned to the virtual connections, and wherein the sorting means comprise several sorting devices (44^{(u)}) each processing data elements comprising identities of virtual connections of like priority index and each selecting, from among the data elements which it processes, an element having a minimum sort key (K^{(u)}(1)), and wherein the spacing control means are devised so as to command the emission of a cell contained in the start of list relating to the identified connection either in that one of the data elements selected which exhibit the smallest sort key or, if several sorting devices each select a data element whose sort key is the smallest, in that one of the data elements selected by these sorting devices for which the priority index is a maximum.

6. Spacer according to Claim 5, wherein the various sorting devices each comprise respective storage means (20q⁽¹⁾), 20q⁽²⁾) and share their control means (21q, 26q).

7. Spacer according to Claim 1, wherein the means of control of the binary tree comprise m successive controllers (21_{q}) each associated with a stage (20_{q}) or with a plurality of consecutive stages of the binary tree, m being an integer lying between 2 and n, and n-1 interface registers (26_{q}) between successive stages, among which each of the m-1 interface registers between stage pairs associated with different controllers constitutes a pipeline register, and wherein each command for modifying the contents of the binary tree is propagated from stage 0 to stage n-1 by means of the interface registers, the pipeline register or registers allowing parallel working of the controllers.

8. Spacer according to Claim 7, wherein, for each integer q lying between 1 and n-1, the interface register (26_{q}) between stage q-1 and stage q comprises a first location for receiving a command (A_{q}) propagated from a node of stage q-1 to a node of stage q, a second location for receiving an identification (D_{q}) of said node of stage q-1 which the associated controller (21_{q-1}) accesses during the processing of said command, and a third location for receiving a data element (B_{q}, C_{q} transmitted from or to said node of stage q-1.

9. Spacer according to Claim 8, wherein, for each integer q lying between 1 and n-1, the interface register (26_{q}) between stage q-1 and stage q comprises a fourth location for receiving a bit (E_{q}) designating, with the identification (D_{q}) contained in the second location, the node of stage q to which said command is propagated and to which the associated controller (21_{q}) accesses during the processing of the command contained in the first location if this command refers to the insertion of a new element into the tree.

10. Spacer according to Claim 9, wherein, for each integer q lying between 1 and n-1, the second and fourth locations of the interface register (26_{q}) between stage q-1 and stage q form part of a leaf designation field of n-1 bits containing, during the propagation of a command for inserting a new element, the n-1 lowest order bits of the number of a free leaf, that is to say of a free node of stage n-1, towards which said command is propagated, the node of stage q to which said command is propagated being designated by the q highest order bits of the contents of the leaf designation field.

11. Spacer according to Claim 10, wherein the controller (21ₙ₋₁) associated with stage n-1 of the tree manages a first list of free leaves containing a specified number n' of free leaves including each leaf towards which a command for inserting a new element is currently being propagated within the tree, and a second list of free leaves containing the free leaves not contained in the first list,
wherein, during the registering of a command for inserting a new element to be sorted into the first location of the interface register between stages 0 and 1, the n-1 lowest order bits of the number of a free leaf of the first list, different from each leaf towards which another insertion command is currently being propagated within the tree, are registered into the leaf designation field of the interface register between stages 0 and 1,
wherein, during the extraction of an element from a leaf of the tree, said leaf is included in the second list of free leaves,
and wherein, when a command for inserting a new element reaches stage n-1 in the interface register (26ₙ₋₁) between stages n-2 and n-1, the associated controller (21ₙ₋₁) removes from the first list of free leaves the leaf (Gₙ₋₁) designated by the n-1 bits of the leaf designation field of said interface register, and replaces it by a leaf from the second list.

12. Spacer according to Claim 11, wherein n'<n.

13. Spacer according to Claim 11 or 12, wherein the first list of free leaves is stored in a shift register (30) looped back on itself, having n' locations each receiving the n-1 lowest order bits of a leaf number.

14. Spacer according to Claim 11, 12 or 13, wherein the second list of free leaves is stored in last-in first-out mode in the form of a chain of pointers, each pointer representing the number of a leaf, the first pointer (P) of the chain being stored at a specific location, and the i-th pointer of the chain (i≥2) being stored in the leaf whose number is represented by the (i-1)-th pointer of the chain.

15. Spacer according to Claim 11 or 12, wherein the first and second lists are stored in the form of a logic queue of first-in first-out type having at least n' locations, the first list consisting of the last n' locations of the logic queue and the second list of the preceding locations of the logic queue.

16. Spacer according to Claim 10 or 11, wherein, p being the number, greater than or equal to 1 and less than n-1, of stages of the binary tree which are associated with the m-th controller, the storage means comprise at least 2^{n-1-p}-1 locations (25) for containing differential counters (Δ(i)) respectively associated with the pairs of nodes 2i and 2i+1 of the tree for i ranging from 1 to 2^{n-1-p}, each differential counter associated with a pair of nodes having a value indicative of the difference between the numbers of data elements respectively contained in the descendants of the two nodes of said pair, the descendants of a node i of a stage q being defined as the 2^{n-q}-1 nodes of the binary tree whose numbers are of the form i2^{j}+j' where j and j' are integers such that 0≤j<n-q and 0≤j'<2^{j},
and wherein, when the interface register (26_{q}) between stage q-1 and stage q(1≤q<n-p) receives a command (A_{q}) for inserting a new element into its first location and the identification (D_{q}) of a node i of stage q-1 into its second location, said insertion command is propagated to node 2i or 2i+1 of stage q depending on the value of the differential counter (Δ(i)) associated with the pair of nodes 2i and 2i+1.

17. Spacer according to Claim 16, wherein the locations (25) of the storage means containing the differential counters (M(i)) associated with the pairs of nodes of a stage are accessible by the same controller as the nodes of said stage.

18. Spacer according to any one of Claims 10 to 17, wherein the storage means comprise 2ⁿ⁻¹-1 locations (23) for containing steering bits (F(i)) respectively associated with the pairs of nodes 2i and 2i+1 of the tree for i ranging from 1 to 2ⁿ⁻¹-1, each steering bit associated with a pair of nodes pointing to one of the nodes of said pair containing an element whose sort key is less than or equal to the sort key of the element contained in the other node of said pair,
and wherein, when the interface register (26q) between stage q-1 and stage q (1≤q<n-1) receives a command (A_{q}) for extracting or exchanging an element in its first location and the identification (D_{q}) of a node i of stage q-1 in its second location, said extraction or exchange command is propagated to node 2i or 2i+1 of stage q depending on the value of the steering bit (F(i)) associated with the pair of nodes 2i and 2i+1.

19. Spacer according to Claim 18, wherein the locations (23) of the storage means containing the steering bits (F(i)) associated with the pairs of nodes of a stage are accessible by the same controller as the nodes of said stage.

20. Spacer according to Claim 1, wherein the means of control of the binary tree comprise two successive controllers (21_{0,n-p}, 21_{n-p,p}) each associated with one stage or with several consecutive stages of the binary tree, and n-1 interface registers between successive stages, among which the interface register (26ₙ₋ₚ) between the two consecutive stages respectively associated with the two controllers constitutes a pipeline register allowing parallel working of the two controllers, wherein the spacing control means and the means of control of the binary tree are devised so as to divide each cell period into a first phase (I) and a second phase (II), in such a way that a command for inserting a new data element to be sorted is processed by the second controller in the first phase and by the first controller in the second phase, and that a command for extracting or exchanging a data element in the tree is processed by the first controller in the first phase and by the second controller in the second phase, the insertion command being propagated from stage n-1 to stage 0 by means of the interface registers, and the extraction or exchange command being propagated from stage 0 to stage n-1 by means of the interface registers.

21. Spacer according to any one of Claims 7 to 20, wherein the first controller, which is associated with stage 0 at least, forms part of the spacing control means.
